# EUROPEAN PATENT APPLICATION

(11) **EP 4 676 002 A1**
(43) Date of publication of application: **07.01.2026**
(21) Application number: 24777764.2
(22) Date of filing: 15.03.2024
(51) Int. Cl.: H04L 61/4511

(54) **APPLICATION ADDRESSING METHOD AND APPARATUS**

(30) Priority: 31.03.2023 CN 202310383976
(71) Applicant: HUAWEI TECHNOLOGIES CO., LTD., Shenzhen, Guangdong 518129 (CN)
(72) Inventor: LI, Hancheng, Shenzhen, Guangdong 518129 (CN); ZHOU, Han, Shenzhen, Guangdong 518129 (CN); WU, Wenfu, Shenzhen, Guangdong 518129 (CN)
(74) Representative: Gill Jennings & Every LLP
(86) International application number: PCT/CN2024/082012
(87) International publication number: WO 2024/198975

(57) **Abstract**

Embodiments of this application provide an application addressing method and an apparatus, and relate to the field of communication technologies. The application addressing method includes: A first network element obtains address segment information corresponding to a user plane network element managed by a first session management network element. When address information of a first application is in the address segment information corresponding to the user plane network element managed by the first session management network element, the first network element sends first indication information to the first session management network element, so that signaling sent to the first session management network element can be reduced. The first indication information is used to trigger the first session management network element to select, for a terminal device, a user plane network element corresponding to the address information of the first application.

## Description

### CROSS-REFERENCE TO RELATED APPLICATIONS

This application claims priority to Chinese Patent Application No. 202310383976.0, filed with the China National Intellectual Property Administration on March 31, 2023 and entitled "APPLICATION ADDRESSING METHOD AND APPARATUS", which is incorporated herein by reference in its entirety.

### TECHNICAL FIELD

Embodiments of this application relate to the field of communication technologies, and in particular, to an application addressing method and an apparatus.

### BACKGROUND

With rapid development of a 3GPP system in 5th generation (5th generation, 5G), an application scope of an edge application service discovery function (edge application server discovery function, EASDF) network element is increasingly wide.

In an edge computing scenario, a terminal device usually obtains, by using a domain name system (domain name system, DNS) request initiated by the EASDF network element, address information of an application to be accessed by the terminal device. Then, the EASDF network element sends a DNS response message to a session management function (session management function, SMF) network element, to trigger creation of a path to the application to be accessed by the terminal device. However, when a large quantity of applications are deployed at an edge, the EASDF network element may send all DNS response messages to the SMF network element to trigger path creation. As a result, the SMF network element receives excessive signaling. Therefore, currently, an application addressing method is in an urgent need.

### SUMMARY

This application provides an application addressing method and an apparatus, to reduce signaling sent to a session management network element.

According to a first aspect, this application provides an application addressing method, applied to a first network element. The method includes: The first network element obtains address segment information corresponding to a user plane network element managed by a first session management network element. When address information of a first application is in the address segment information corresponding to the user plane network element managed by the first session management network element, the first network element sends first indication information to the first session management network element. The first indication information is used to trigger the first session management network element to select, for a terminal device, a user plane network element corresponding to the address information of the first application.

According to the method, when determining that the address information of the first application is in the address segment information corresponding to the user plane network element managed by the first session management network element, the first network element sends the first indication information to the first session management network element. This reduces signaling sent to the first session management network element and avoids circumambulation caused when a local application is requested, thereby increasing addressing efficiency.

In an optional design, the first network element may receive the address segment information that corresponds to the user plane network element managed by the first session management network element and that is sent by the first session management network element.

In an optional design, the first network element may further receive application information that is of the first application and that is sent by the first session management network element, where the first application is an application corresponding to the user plane network element managed by the first session management network element, and the application information is used by the first network element to determine the first session management network element.

In an optional design, the first network element receives a domain name resolution request from the terminal device, where the domain name resolution request is used to obtain the address information that is of the first application and that is requested by the terminal device. The first network element determines the address information of the first application based on the domain name resolution request.

In an optional design, when the first network element determines that the address information of the first application is not in the address segment information corresponding to the user plane network element managed by the first session management network element, the first network element sends the address information of the first application to the first session management network element.

According to this design, when determining that the first application is a non-local application, that the first network element sends the address information of the first application to the first session management network element may provide a data basis for the first session management network element to subsequently indicate, based on the address information of the first application, a second session management network element to select the user plane network element corresponding to the address information of the first application.

In an optional design, the first network element is an edge application server discovery function network element or a user plane network element.

According to a second aspect, this application further provides an application addressing method, applied to a first session management network element. The method includes: The first session management network element receives first indication information from a first network element. The first indication information is used to trigger the first session management network element to select, for a terminal device, a user plane network element corresponding to address information of a first application. The first session management network element may select, from a plurality of user plane network elements managed by the first session management network element, a first user plane network element corresponding to the address information of the first application.

According to the method, the first session management network element may select, for the terminal device, the first user plane network element corresponding to the address information of the first application as a forwarding network element for the terminal device to access the first application.

In an optional design, the first session management network element may create, based on the first user plane network element, a first access path for the terminal device to access the first application.

In an optional design, the first session management network element may further receive the address information of the first application from the first network element, and determine whether the address information of the first application is in address segment information of the plurality of user plane network elements managed by the first session management network element. When the address information of the first application is not in the address segment information, the first session management network element sends second indication information to a second session management network element. The second indication information is used to trigger the second session management network element to select, for the terminal device, a user plane network element corresponding to the address information of the first application.

According to this design, when a domain managed/served by the first session management network element does not include the first application, the first session management network element sends the second indication information to the second session management network element, so that the second session management network element selects, for the terminal device, the user plane network element corresponding to the address information of the first application, to implement addressing of cross-domain access.

In an optional design, when the second indication information includes tunnel information of a second user plane network element, the first session management network element receives path information of a second access path from the second session management network element. The second user plane network element is a user plane network element managed by the first session management network element, the path information includes tunnel information of a third user plane network element and address segment information corresponding to the second access path, and the third user plane network element is the user plane network element that is managed by the second session management network element and that corresponds to the address information of the first application. The first session management network element may configure the path information for the second user plane network element.

According to this design, when the second indication information includes the tunnel information of the second user plane network element, the second session management network element may create the second access path based on the tunnel information of the second user plane network element. In addition, the first session management network element may receive the path information from the second session management network element, and configure the path information for the second user plane network element, to complete creation of the second access path.

In an optional design, the first session management network element may further send, to the first network element, address segment information corresponding to the user plane network element managed by the first session management network element and application information of the first application. The first application is an application corresponding to the user plane network element managed by the first session management network element, and the application information is used by the first network element to determine the first session management network element.

According to a third aspect, this application further provides an application addressing method, applied to a second session management network element. The method includes: The second session management network element receives second indication information from a first session management network element. The second indication information is used to trigger the second session management network element to select, for a terminal device, a user plane network element corresponding to address information of a first application. The second session management network element may select, from a plurality of user plane network elements managed by the second session management network element, a third user plane network element corresponding to the address information of the first application.

According to the method, the second session management network element may select, for the terminal device, the third user plane network element as a forwarding network element for the terminal device to access the first application, to provide a basis for the terminal device to subsequently perform cross-domain access to the first application.

In an optional design, the second session management network element may create, based on the third user plane network element, a second access path for the terminal to access the first application.

According to this design, the second session management network element may create the second access path for the terminal device to access the first application, to implement cross-domain access of the terminal device to the first application.

In an optional design, when the second indication information includes tunnel information of a second user plane network element, the second session management network element sends path information of the second access path to the first session management network element. The second user plane network element is a user plane network element managed by the first session management network element, and the path information includes tunnel information of the third user plane network element and address segment information corresponding to the second access path.

According to this design, when determining that the second access path relates to the second user plane network element, the second session management sends the path information of the second access path to the first session management network element, so that the first session management network element can configure the path information for the second user plane network element, to complete creation of the second access path.

According to a fourth aspect, this application provides a communication apparatus. The communication apparatus includes a processing module and a transceiver module. The processing module may receive or send a message via the transceiver module. The processing module may be configured to perform the method according to any one of the foregoing aspects and implementations.

In a possible implementation, the communication apparatus may be the first network element in the first aspect, or may be a chip or a system-on-a-chip in the first network element. The communication apparatus may include a corresponding module, unit, or means (means) for implementing the method according to the first aspect. The module, unit, or means may be implemented by hardware, software, or hardware executing corresponding software. The hardware or software includes one or more modules or units corresponding to the foregoing functions.

In another possible implementation, the communication apparatus may be the first session management network element in the second aspect, or a chip or a system-on-a-chip in the first session management network element. The communication apparatus may include a corresponding module, unit, or means (means) for implementing the method according to the second aspect. The module, unit, or means may be implemented by hardware, software, or hardware executing corresponding software. The hardware or software includes one or more modules or units corresponding to the foregoing functions.

In another possible implementation, the communication apparatus may be the second session management network element in the third aspect, or a chip or a system-on-a-chip in the second session management network element. The communication apparatus may include a corresponding module, unit, or means (means) for implementing the method according to the third aspect. The module, unit, or means may be implemented by hardware, software, or hardware executing corresponding software. The hardware or software includes one or more modules or units corresponding to the foregoing functions.

According to a fifth aspect, this application provides a communication apparatus, including a processor, and may further include a memory. The memory is configured to store computer instructions. When the processor executes the instructions, the communication apparatus is enabled to perform the method according to any one of the first aspect to the third aspect. The communication apparatus may be the first network element, or an apparatus in the first network element, for example, a system chip; or the communication apparatus may be the first session management network element, or an apparatus in the first session management network element, for example, a system chip; or the communication apparatus may be the second session management network element, or an apparatus in the second session management network element, for example, a system chip.

According to a sixth aspect, this application provides a chip. The chip includes a processor, and may further include a memory, configured to execute a computer program or instructions stored in the memory, so that the chip implements the method according to any one of the first aspect to the third aspect and any possible implementation of the first aspect to the third aspect.

According to a seventh aspect, this application provides a computer program product. The computer program product includes computer instructions (which may also be referred to as code or instructions). When the computer instructions are run, the method according to any possible implementation of any one of the first aspect to the third aspect is performed.

According to an eighth aspect, this application provides a computer-readable storage medium. The computer-readable storage medium stores computer instructions (which may also be referred to as code or instructions). When the computer instructions are run on a computer or a processor, the computer or the processor is enabled to perform the method according to any possible implementation of any one of the first aspect to the third aspect.

According to a ninth aspect, this application provides a communication system. The communication system includes the first network element in the first aspect, may further include the first session management network element in the second aspect, and may further include the second session management network element in the third aspect.

### BRIEF DESCRIPTION OF DRAWINGS

FIG. 1 is a diagram of an architecture of a communication system according to an embodiment of this application;
FIG. 2 is a schematic flowchart of an application addressing method according to an embodiment of this application;
FIG. 3 is a diagram of an architecture of a communication system according to an embodiment of this application;
FIG. 4A and FIG. 4B are a schematic flowchart of an application addressing instance according to an embodiment of this application;
FIG. 5 is a diagram of an architecture of another communication system according to an embodiment of this application;
FIG. 6A to FIG. 6D are a schematic flowchart of another application addressing instance according to an embodiment of this application;
FIG. 7 is a diagram of an architecture of still another communication system according to an embodiment of this application;
FIG. 8 is a diagram of an architecture of yet another communication system according to an embodiment of this application;
FIG. 9A to FIG. 9C are a schematic flowchart of still another application addressing instance according to an embodiment of this application;
FIG. 10 is a complete schematic flowchart of an application addressing method according to an embodiment of this application;
FIG. 11A and FIG. 11B are a complete schematic flowchart of another application addressing method according to an embodiment of this application;
FIG. 12 is a diagram of an architecture of yet another communication system according to an embodiment of this application;
FIG. 13 is a diagram of an architecture of yet another communication system according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following describes the technical solutions of this application with reference to the accompanying drawings.

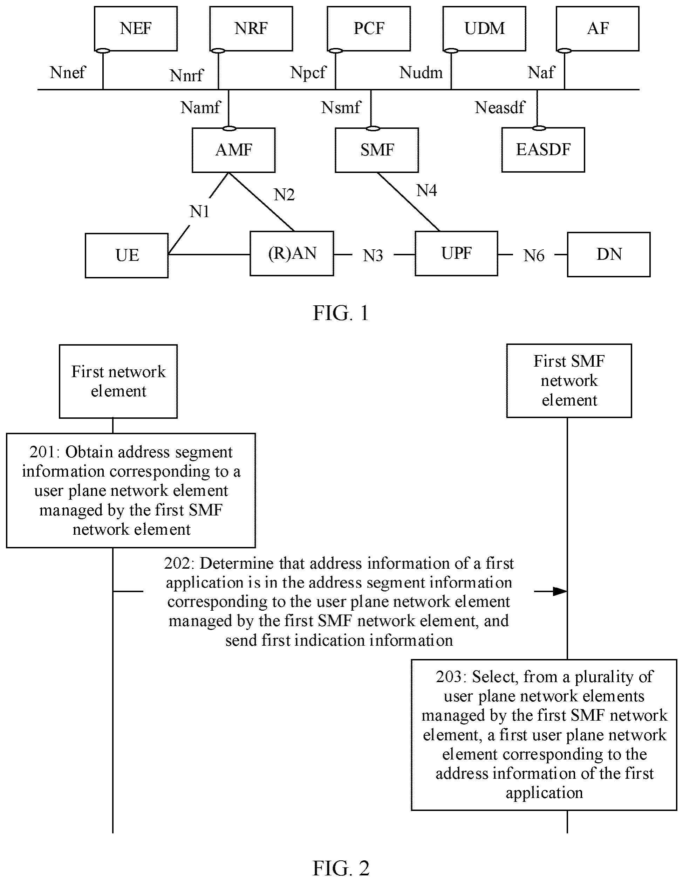

FIG. 1 is a diagram of an architecture of a communication system. As shown in FIG. 1, the communication system may include a terminal device, a (radio) access network ((radio) access network, (R)AN), a core network, and a data network (data network, DN).

As shown in FIG. 1, the core network may include a network exposure function (network exposure function, NEF) network element, a policy control function (policy control function, PCF) network element, a unified data management (unified data management, UDM) network element, an application function (application function, AF) network element, an access and mobility management function (access and mobility management function, AMF) network element, a session management function (session management function, SMF) network element, an edge application server discovery function (edge application server discovery function, EASDF) network element, a user plane function (user plane function, UPF) network element, and the like.

For ease of description, an example in which the (R)AN is referred to as a RAN is used for description below.

The terminal device (which may also be referred to as user equipment (user equipment, UE)) is a device having wireless transmission and reception functions, and may be deployed on land, for example, an indoor or outdoor device, a handheld device, or a vehicle-mounted device, or may be deployed on water (for example, on a steamship), or may be deployed in the air (for example, on an airplane, a balloon, or a satellite). The terminal device may be a mobile phone (mobile phone), a tablet computer (pad), a computer that has a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the core network through an interface (for example, N1) provided by the core network, and use a service provided by the core network. The terminal device may further access the DN over the core network, and use a service deployed on the DN and/or a service provided by a third party. The third party may be a service provider other than the terminal device, and may provide other services such as a data service and/or a voice service for the terminal device. A specific representation form of the third party may be specifically determined based on an actual application scenario, and is not limited herein.

It should be understood that the terminal device may be any device that can access a network and access a service deployed on the DN. The terminal device and an access network device may communicate with each other by using an air interface technology.

A device located in the RAN is referred to as an access network device, also referred to as a (radio) access network ((radio) access network, (R)AN) device, and is a device that provides a wireless communication function for the terminal device. For example, the access network device includes but is not limited to: a next-generation NodeB (g NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, and/or the like.

The AMF network element is a control plane network element in the core network, and is responsible for access control and mobility management for the terminal device to access the core network, for example, including functions such as mobility status management, temporary user identity allocation, and user authentication and authorization.

The SMF network element is a control plane network element in the core network, and is responsible for managing a protocol data unit (protocol data unit, PDU) session of the terminal device. The PDU session is a channel used to transmit a PDU, and the terminal device and the DN need to transmit the PDU to each other through the PDU session. The SMF network element is responsible for establishment, maintenance, deletion, and the like of the PDU session. The SMF network element includes session-related functions such as session management (for example, session establishment, modification, and release, including protocol transmission user packet (GPRS tunneling protocol for the user plane, GTP-U) tunnel maintenance between the UPF and the RAN), UPF network element selection and control, service and session continuity (service and session continuity, SSC) mode selection, and roaming.

The UPF network element is a user plane network element in the core network, and is a gateway for communication between the core network and the DN and communication between the RAN and the DN. The UPF network element includes user plane-related functions such as data packet routing and transmission, packet detection, service usage reporting, quality of service (quality of service, QoS) processing, lawful interception, uplink data packet detection, and downlink data packet storage. For example, UPFs may be classified into a protocol data unit session anchor UPF (protocol data unit session anchor UPF, PSA UPF) and an uplink classifier functionality UPF (uplink classifier functionality UPF, UL CL UPF).

The UPF shown in FIG. 1 is a PSA UPF. The PSA UPF is a UPF that supports a function of a PDU session anchor. The UE is connected to the AMF through the N1 interface. The RAN is connected to the AMF through an N2 interface, and is connected to the PSA UPF through an N3 interface. The PSA UPF is connected to the SMF through an N4 interface. The PSA UPF is connected to the DN through an N6 interface.

In the following descriptions, for brevity of description, the PSA UPF may be referred to as a PSA for short, and the UL CL UPF may be referred to as a UL CL for short.

The DN may also be referred to as a packet data network (packet data network, PDN), and is a network located outside the core network. The core network may access a plurality of DNs, and a plurality of services may be deployed on the DN, to provide services such as data and/or voice for the terminal device.

The EASDF network element is mainly responsible for discovering an edge application service, and includes functions such as registering the EASDF network element with the NRF network element for discovery and selection, processing a domain name system (domain name system, DNS) message according to an indication of the SMF network element, and terminating DNS security.

The UDM network element is a control plane network element in the core network, and is responsible for storing information such as a subscriber permanent identifier (subscriber permanent identifier, SUPI), a security context (security context), and subscription data of a subscriber in the core network. The information stored in the UDM network element may be used for authentication and authorization when the terminal device accesses the core network and the RAN.

The NEF network element is a control plane network element in the core network. The NEF network element securely exposes an external interface of the core network to a third party. When the SMF network element needs to communicate with a third-party network element, the NEF network element may serve as a relay for communication between the SMF network element and the third-party network element.

The PCF network element is a control plane function in the core network, and is configured to provide a policy of a PDU session for the SMF network element. The policy may include a charging-related policy, a QoS-related policy, an authorization-related policy, and the like.

The AF network element is a functional network element that provides various services, can interact with the core network via the NEF network element, and can interact with a policy management framework to perform policy management, for example, provide a routing rule and a processing policy for the core network.

In FIG. 1, Nnssf, Nnef, Nnrf, Npcf, Nudm, Naf, Nausf, Namf, Nsmf, Neasdf, N1, N2, N3, N4, N6, and a communication interface N9 that is between the UPF network elements and that is not shown are interface sequence numbers. For meanings of the interface sequence numbers, refer to meanings defined in the 3GPP standard protocol. This is not limited herein.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be jointly implemented by a plurality of devices, or may be implemented by a functional module in one device. This is not specifically limited in embodiments of this application.

In addition, the network architecture of the communication system is merely an example of a possible network architecture to which the technical solutions provided in this application are applicable. The technical solutions provided in this application may be further applicable to a future network architecture or another similar network architecture, for example, a 6G network architecture.

In the conventional technology, a terminal device obtains, by using a DNS request initiated by an EASDF network element, address information of an application to be accessed by the terminal device, and the EASDF network element sends a DNS response message to an SMF network element, to trigger the SMF network element to create a path for the terminal device to access the application. However, when a large quantity of applications are deployed at an edge, the EASDF network element may send all DNS response messages to the SMF network element to trigger path creation. As a result, the SMF network element receives excessive signaling. Therefore, currently, an application addressing method is in an urgent need.

Embodiments of this application provide an application addressing method and an apparatus, to reduce signaling overheads in a communication system. According to the method, a first network element obtains address segment information corresponding to a user plane network element managed by a first SMF network element. Then, when determining that address segment information of a first application is in the address segment information corresponding to the user plane network element managed by the first SMF network element, the first network element sends first indication information to the first SMF network element. The first indication information is used to trigger the first SMF network element to select a user plane network element corresponding to address information of the first application.

The following specifically describes the application addressing method according to specific embodiments.

### Embodiment 1

FIG. 2 is a schematic flowchart of an application addressing method according to an embodiment of this application. The method is described as follows.

Step 201: A first network element obtains address segment information corresponding to a user plane network element managed by a first SMF network element.

In some embodiments, the address segment information corresponding to the user plane network element managed by the first SMF network element may be sent by the first SMF network element to the first network element, or may be locally configured for the first network element. For example, the first SMF network element may send, to the first network element, the address segment information corresponding to the user plane network element managed by the first SMF network element.

The first SMF network element may further send application information of a first application to the first network element. The first application is an application corresponding to a user plane network element managed by the first SMF network element, the application information is used by the first network element to determine the first session management network element, and the application information is used to represent an application layer address of the application.

In some embodiments, the first network element may be an EASDF network element, or may be a UPF network element, or may be a network element that couples functions of the EASDF network element and the UPF network element.

Step 202: The first network element determines that address information of the first application is in the address segment information corresponding to the user plane network element managed by the first SMF network element, and sends first indication information to the first SMF network element. The first SMF network element receives the first indication information.

The first indication information is used to trigger the first SMF network element to select, for a terminal device, a user plane network element corresponding to the address information of the first application.

In some embodiments, the first network element may determine the first SMF network element corresponding to the application information of the first application, and then the first network element may send the first indication information to the first SMF network element.

In some embodiments, the first network element may determine the address information of the first application by using the following steps:

A1: The first network element receives a domain name resolution request from the terminal device. The domain name resolution request is used to obtain the address information that is of the first application and that is requested by the terminal device.

In some embodiments, before starting an application (application, APP) to send a domain name resolution request to obtain the address information of the first application corresponding to the APP, the terminal device further needs to initiate a session establishment procedure or reuse an existing session of the terminal device, to establish a user plane connection between the terminal device and the UPF network element.

In some examples, when the terminal device initiates a session establishment request, an SMF network element that serves the terminal device may select a UPF network element as an anchor UPF to establish a PDU session. The SMF network element may be the first SMF network element, or may be another SMF network element that serves the terminal device.

The SMF network element may further select the first network element for an established PDU session in a domain managed/served by the SMF network element, and configure a DNS processing policy for the first network element. The first network element may be an independent network element, or may be an existing EASDF network element. For example, the first network element may be a UPF network element.

The SMF network element may further configure at least one of first extension mechanisms for DNS client subnet (extension mechanisms for DNS client subnet, ECS) information, an address of the terminal device, and an address of a first DNS for the first network element. The first ECS information is used to represent a location of the terminal device.

The SMF network element may send an address of the first network element to the terminal device as a DNS server address of the terminal device.

A specific implementation in which the terminal device starts the APP to initiate the session establishment process and the SMF network element selects the first network element is not limited in embodiments of this application. For details, refer to descriptions in a current related technology. Details are not described herein.

After the session is established, the terminal device sends the domain name resolution request to obtain the address information of the first application corresponding to the APP. A destination address of the domain name resolution request is the first network element. The first network element receives the domain name resolution request.

A2: The first network element determines the address information of the first application based on the domain name resolution request.

In some embodiments, the first network element may add the first ECS information to the domain name resolution request, modify a source address of the domain name resolution request to the address of the first network element, and modify the destination address to the address of the first DNS server, to obtain a first DNS packet. The first DNS server and the first SMF network element manage/serve a same domain, and the first DNS server may be configured by the first SMF network element for the first network element.

The first network element sends the first DNS packet to the first DNS server. The first DNS server performs a local query or queries a higher-level DNS server based on the received first DNS packet, to obtain a query result. Then, the first DNS server generates a first response to the first DNS packet based on the query result, and returns the first response to the first network element. When the query result is that the first DNS server obtains the address information of the first application through query, the first response carries a first application address. When the query result is a query error, the first response does not carry a first application address.

After receiving the first response, the first network element may determine the address information of the first application based on the first response. The first response may carry the first application address, or may not carry the first application address. The following separately describes application addressing based on the foregoing two cases.

Case 1: The first response carries the first application address.

When the first response carries the first application address, the first network element determines that the address information of the first application is the first application address.

After determining the address information of the first application, the first network element determines whether the address information of the first application is in the address segment information corresponding to the user plane network element managed by the first SMF network element.

In some embodiments, when the first network element determines that the first application address is in the address segment information corresponding to the user plane network element managed by the first SMF network element, the first network element may further determine whether the first application address is in address segment information that is in the first network element and that corresponds to an access path that has been configured for the terminal device. Further, the first network element may determine whether an access path related to the first application address has been created for the terminal device.

In some scenarios, when the first application address is in the address segment information that is in the first network element and that corresponds to the access path that has been configured for the terminal device, the first network element determines that the access path related to the first application address has been created for the terminal device, and may send the address information of the first application to the terminal device. The address segment information that is in the first network element and that corresponds to the access path that has been configured for the terminal device may be sent by the first SMF network element to the first network element. After receiving the address segment information, the first network element may record and store the address segment information.

In some other scenarios, when the first application address is not in the address segment information that is in the first network element and that corresponds to the access path that has been configured for the terminal device, the first network element may send the first indication information to the first SMF network element. The first SMF network element receives the first indication information.

Optionally, the first indication information may include the first application address or address segment information corresponding to the first application address, and may further include the address of the terminal device or an identifier of the terminal device.

Step 203: The first SMF network element selects, from a plurality of user plane network elements managed by the first SMF network element, a first user plane network element corresponding to the address information of the first application.

In some embodiments, after receiving the first indication information, the first SMF network element determines the address information of the first application or address segment information corresponding to the address information of the first application. Regardless of whether the first indication information includes the address information of the first application or the address segment information corresponding to the address information of the first application, processes in which the first SMF network element selects the first user plane network element and creates a first access path are the same. The following describes creation of the first access path by the first SMF network element by using an example in which the first indication information includes the address information of the first application.

The first SMF network element may determine whether the address information of the first application is in address segment information that is in the first SMF network element and that corresponds to an access path that has been configured for the terminal device.

In some scenarios, when the address information of the first application is in the address segment information that is in the first SMF network element and that corresponds to the access path that has been configured for the terminal device, the first SMF network element may send a response message to the first network element, so that the first network element determines that an access path for the terminal device to access the first application has been created.

In some other scenarios, when the address information of the first application is not in the address segment information that is in the first SMF network element and that corresponds to the access path that has been configured for the terminal device, the first SMF network element selects, from the plurality of user plane network elements managed by the first SMF network element, the first user plane network element corresponding to the address information of the first application.

The first SMF network element selects, from the plurality of user plane network elements managed by the first SMF network element, the first user plane network element corresponding to the first application address. Address segment information corresponding to the first user plane network element includes the first application address.

After determining the first user plane network element, the first SMF network element creates, based on the first user plane network element, the first access path for the terminal device to access the first application.

In some examples, the first SMF network element may create/modify a session through N4, to create the first access path. For example, the first SMF network element may create a tunnel between a RAN, the first user plane network element, and a second user plane network element through N4, and configure a forwarding policy for the first user plane network element, to complete creation of the first access path. A forwarding policy of the first access path is as follows: The first user plane network element sends, to a local network or a PSA, a packet that is received from the terminal device and whose destination address is the address information of the first application. The first SMF network element may further send a first indication response to the first network element, to determine that creation of the first access path is completed.

The first indication response may include address segment information corresponding to the first access path. For example, after receiving the first indication response, the first network element may record and store the address segment information corresponding to the first access path in the first indication response.

After receiving the first indication response, the first network element may send the address information of the first application to the terminal device. After receiving the address information of the first application, the terminal device may access the first application through the created first access path.

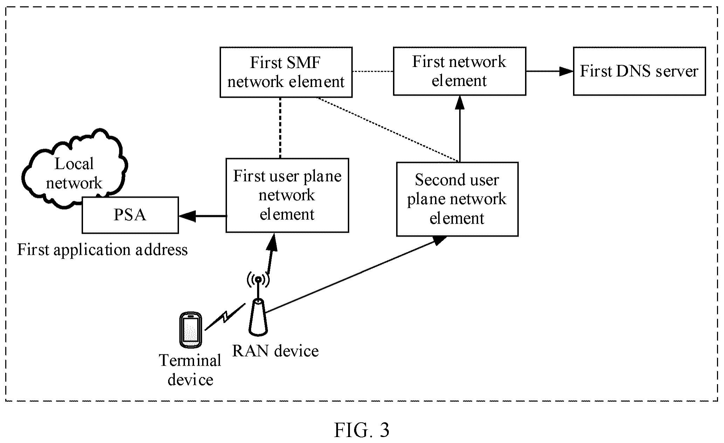

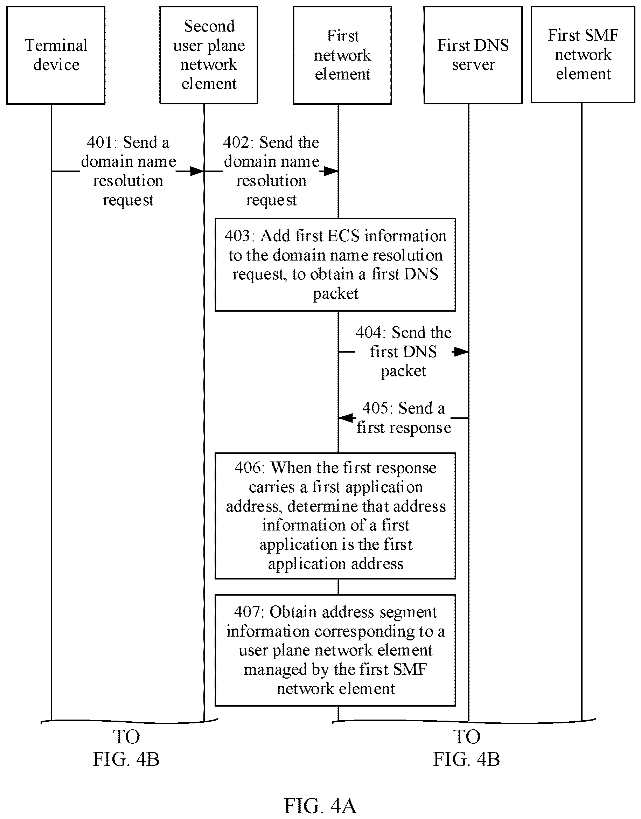

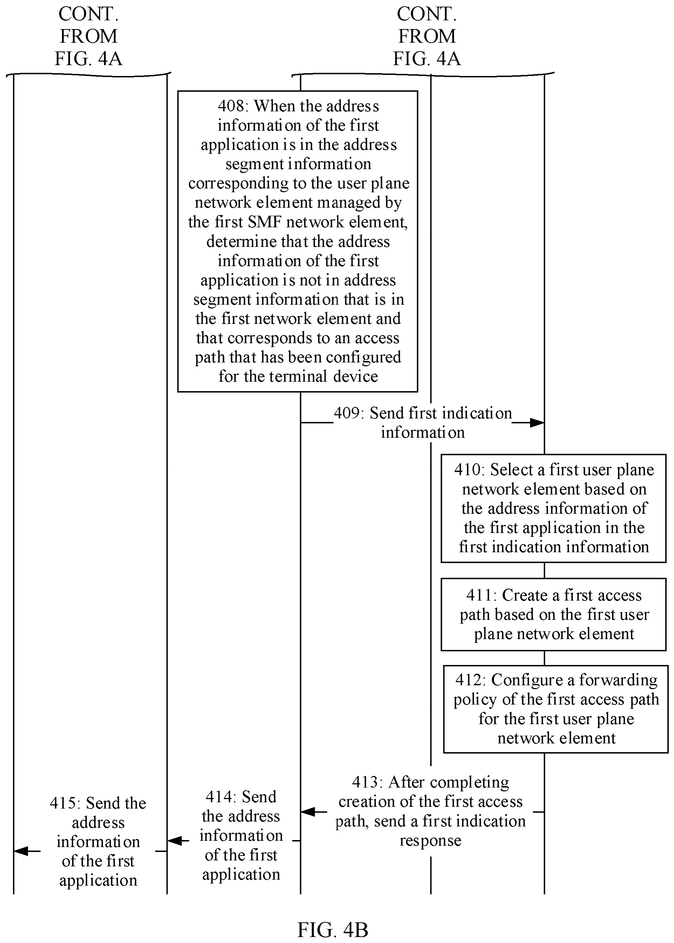

Based on the application addressing method provided in the embodiment shown in FIG. 2, this application further provides an instance of a communication system for application addressing. As shown in FIG. 3, the communication system includes a terminal device, a RAN device, a PSA, a local network, a first DNS server, a first SMF network element, a first network element, a first user plane network element, and a second user plane network element. As shown in FIG. 3, the first network element is an EASDF network element, and the first network element and the first SMF network element manage/serve a same domain. FIG. 4A and FIG. 4B are a flowchart of the instance. The method includes the following steps.

Step 401: The terminal device sends a domain name resolution request. The second user plane network element receives the domain name resolution request. The domain name resolution request is used to obtain address information that is of a first application and that is requested by the terminal device, and a destination address of the domain name resolution request is an address of the first network element.

In some embodiments, before sending the domain name resolution request, the terminal device has established a user plane connection to the user plane network element.

Step 402: The second user plane network element sends the domain name resolution request to the first network element. The first network element receives the domain name resolution request.

Step 403: The first network element adds first ECS information to the domain name resolution request, to obtain a first DNS packet.

Step 404: The first network element sends the first DNS packet to the first DNS server. The first DNS server receives the first DNS packet.

Step 405: The first DNS server sends a first response to the first network element. The first network element receives the first response.

The first response carries a query result obtained by the first DNS server through local query or by querying a higher-level DNS server.

Step 406: When the first response carries a first application address, the first network element determines that the address information of the first application is the first application address.

Step 407: The first network element obtains address segment information corresponding to a user plane network element managed by the first SMF network element.

In some embodiments, the first network element may receive the address segment information that corresponds to the user plane network element managed by the first SMF network element and that is sent by the first SMF network element.

Step 408: When the address information of the first application is in the address segment information corresponding to the user plane network element managed by the first SMF network element, the first network element may determine that the address information of the first application is not in address segment information that is in the first network element and that corresponds to an access path that has been configured for the terminal device.

Step 409: The first network element sends first indication information to the first SMF network element. The first SMF network element receives the first indication information sent by the first network element.

Step 410: The first SMF network element selects the first user plane network element based on the address information of the first application in the first indication information.

Step 411: The first SMF network element creates a first access path based on the first user plane network element.

Step 412: The first SMF network element configures a forwarding policy of the first access path for the first user plane network element.

The first access path is a tunnel between the RAN, the first user plane network element, and the local network or the PSA in FIG. 3.

Step 413: After completing creation of the first access path, the first SMF network element may send a first indication response to the first network element. The first network element receives the first indication response sent by the first SMF network element.

The first indication response indicates that creation of the first access path is completed. The first indication response may include address segment information corresponding to the first access path, and the first network element may record and store the address segment information corresponding to the first access path.

Step 414: The first network element may send the address information of the first application to the second user plane network element. The second user plane network element receives the address information of the first application from the first network element.

Step 415: The second user plane network element sends the address information of the first application to the terminal device. The terminal device receives the address information that is of the first application and that is sent by the second user plane network element.

In some embodiments, the terminal device may exchange data with the first application based on the address information of the first application. In addition, a packet subsequently sent by the terminal device to the first application arrives at the local network through the first access path.

Based on the instances shown in FIG. 3 and FIG. 4A and FIG. 4B, when determining that the address information of the first application is in the address segment information corresponding to the user plane network element managed by the first SMF network element, the first network element sends the first indication information to the first SMF network element, so that the first SMF network element selects, for the terminal device, a user plane network element corresponding to the address information of the first application, thereby reducing signaling sent to the SMF network element.

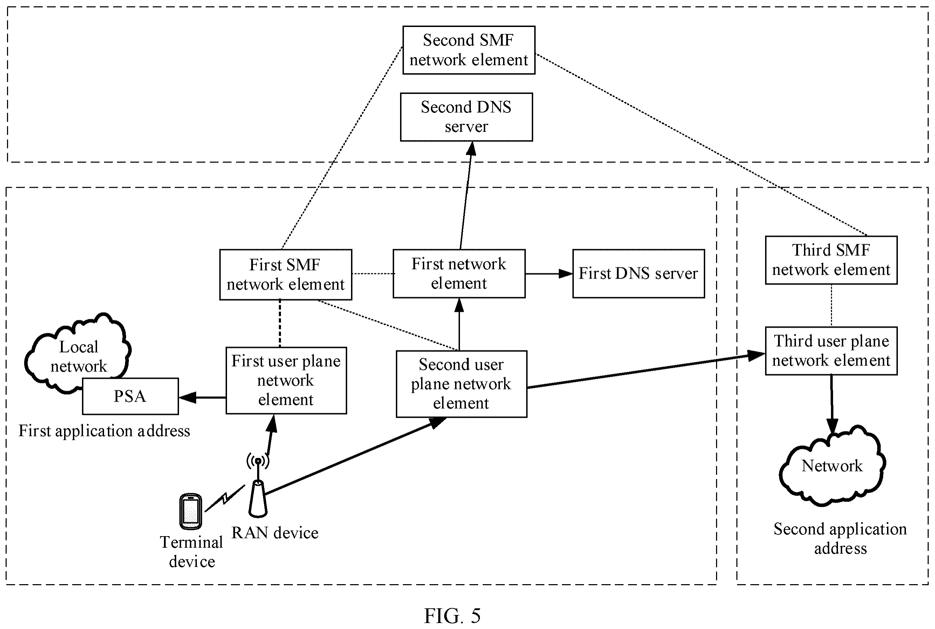

The embodiments corresponding to FIG. 3 and FIG. 4A and FIG. 4B describe content of application addressing based on Case 1 in the embodiment shown in FIG. 2. In addition, the embodiment corresponding to FIG. 2 further includes Case 2: The first response does not carry the first application address. For the embodiment corresponding to FIG. 2, the following specifically describes, with reference to FIG. 5 to FIG. 9A to FIG. 9C, the application addressing method based on Case 2.

Case 2: The first response does not carry the first application address.

When the first response does not carry the first application address, the first network element determines that the address information of the first application is not in the address segment information corresponding to the user plane network element managed by the first SMF network element, and continues to determine the address information of the first application.

In some embodiments, the first network element may continue to send a packet to the DNS server to obtain the address information of the first application, or may determine the address information of the first application via an EASDF network element. The following separately describes application addressing based on the foregoing two cases.

Situation 1: The first network element determines the address information of the first application via the DNS server.

The first network element may add second ECS information to the domain name resolution request, modify a source address of the domain name resolution request to the address of the first network element, and modify the destination address of the domain name resolution request to an address of a second DNS server, to obtain a second DNS packet. The second ECS information is used to represent a location of the terminal device or a location of the first network element, and the second DNS server and the first SMF network element manage/serve different domains.

For example, the second ECS information may be first ECS information configured based on the location of the terminal device, or may be information created based on the address of the first network element, or may be information requested by the first network element from the second DNS server.

After receiving the second DNS packet, the second DNS server returns a second response to the first network element. The second response carries a second application address. After receiving the second response, the first network element determines that the address information of the first application is the second application address.

After determining the address information of the first application, the first network element may further determine whether the address information of the first application is in address segment information that is in the first network element and that corresponds to an access path that has been configured for the terminal device. Further, the first network element may determine whether an access path related to the second application address has been created for the terminal device.

In some scenarios, when the second application address is in the address segment information that is in the first network element and that corresponds to the access path that has been configured for the terminal device, the first network element determines that the access path related to the second application address has been created for the terminal device, and may send the address information of the first application to the terminal device.

In some other scenarios, when the second application address is not in the address segment information that is in the first network element and that corresponds to the access path that has been configured for the terminal device, the first network element may send the address information of the first application to the first SMF network element. For example, the first network element may further send an identifier of the terminal device to the first SMF network element.

After receiving the address information of the first application, the first SMF network element may further determine whether the address information of the first application is in address segment information that is in the first SMF network element and that corresponds to an access path that has been configured for the terminal device.

In some embodiments, when the address information of the first application is in the address segment information that is in the first SMF network element and that corresponds to the access path that has been configured for the terminal device, the first SMF network element may send a response message to the first network element, to notify the first network element that an access path for the terminal device to access the first application has been created.

In some embodiments, when the address information of the first application is not in the address segment information that is in the first SMF network element and that corresponds to the access path that has been configured for the terminal device, the first SMF network element may determine whether the address information of the first application is in address segment information corresponding to a plurality of user plane network elements managed by the first SMF network element.

In some scenarios, when the second application address is in the address segment information corresponding to the plurality of user plane network elements managed by the first SMF network element, the first SMF network element may select, from the plurality of managed user plane network elements, a user plane network element corresponding to the second application address, and create, based on the selected user plane network element, an access path for the terminal device to access the first application. This process is the same as the process in which the first SMF network element selects the first user plane network element and creates the first access path based on the first user plane network element in Case 1. Details are not described herein again.

In some other scenarios, when the second application address is not in the address segment information corresponding to the plurality of user plane network elements managed by the first SMF network element, the first SMF network element sends second indication information to a second SMF network element. The second indication information is used to trigger the second SMF network element to select, for the terminal device, a user plane network element corresponding to the address information of the first application.

In this embodiment of this application, the second indication information may include the second application address or address segment information corresponding to the second application address, and may further include tunnel information of the second user plane network element.

After receiving the second indication information from the first SMF network element, the second SMF network element may select, from a plurality of user plane network elements managed by the second SMF network element, a third user plane network element corresponding to the address information of the first application.

The second SMF network element may select, based on address segment information of each domain, a third user plane network element in a domain in which the address information of the first application is located. The address segment information of each domain in the second SMF network element may be locally configured for the second SMF network element, or may be registered by each SMF network element with the second SMF network element, or may be registered by the first SMF network element with an NRF network element and obtained by the second SMF network element from the NRF network element.

After determining the third user plane network element, the second SMF network element may create, based on the third user plane network element, a second access path for the terminal device to access the first application.

The second SMF network element may send a session creation/modification request to the third user plane network element, where the request includes the address information of the first application or address segment information corresponding to the address information of the first application.

Optionally, when the second indication information received by the second SMF network element includes the tunnel information of the second user plane network element, the request sent by the second SMF network element to the third user plane network element may include the tunnel information of the second user plane network element. After receiving the request, the third user plane network element creates a tunnel from the third user plane network element to the address information of the first application or the address segment information corresponding to the address information of the first application. After creation of the tunnel is completed, the third user plane network element may return tunnel information of the third user plane to the second SMF network element.

In some embodiments, the second SMF network element may further select, based on the address segment information of each domain, a third SMF network element in a domain in which the address information of the first application is located, and the third SMF network element selects the third user plane network element corresponding to the address information of the first application. The second SMF network element may send a session creation/modification request to the third SMF network element. The request may include the address information of the first application or the address segment information corresponding to the address information of the first application, and may further include the tunnel information of the second user plane network element. After receiving the request, the third SMF network element creates the second access path based on the third user plane network element. After the second access path is created, the third SMF network element returns the tunnel information of the third user plane to the second SMF network element.

After receiving the tunnel information of the third user plane network element, the second SMF network element may send path information of the second access path to the first SMF network element. The path information includes the tunnel information of the third user plane network element and address segment information corresponding to the second access path. For example, the address segment information corresponding to the second access path may be the second application address, or may be the address segment information corresponding to the second application address.

The first SMF network element receives the path information of the second access path from the second SMF network element, and configures the path information for the second user plane network element.

The first SMF network element may configure the tunnel information of the third user plane network element and a forwarding policy of the second access path for the second user plane network element based on the path information of the second access path. The forwarding policy of the second access path is as follows: The second user plane network element sends, to a tunnel of the third user plane network element, a packet whose destination address is the address segment information corresponding to the second access path.

In some embodiments, after the second SMF network element receives the tunnel information that is of the second user plane network element and that is sent by the first SMF network element, the second SMF network element creates the second access path when determining, based on deployment information, that the second user plane network element can directly access the second application address through an N6 interface. The second SMF network element may send the path information of the second access path to the first SMF network element, so that the first SMF network element configures the path information for the second user plane network element. The path information includes the address segment information corresponding to the second access path.

The first SMF network element configures the forwarding policy of the second access path for the second user plane network element based on the path information. The forwarding policy of the second access path is as follows: The second user plane network element forwards, to the N6 interface, a packet whose destination address is the address segment information corresponding to the second access path.

After receiving the path information of the second access path, the first SMF network element may send creation complete information to the first network element. The creation complete information indicates that creation of the second access path is completed. The creation complete information may include the address segment information corresponding to the second access path. After receiving the creation complete information, the first network element may record and store the address segment information corresponding to the second access path.

The first network element may send the address information of the first application to the terminal device. The terminal device may exchange data with the first application based on the created second access path.

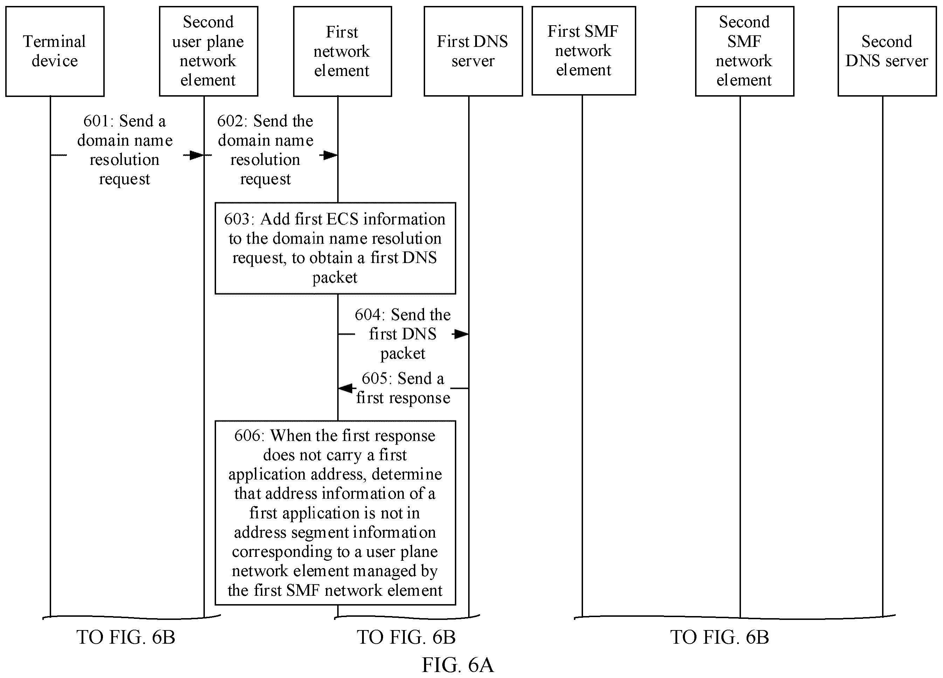

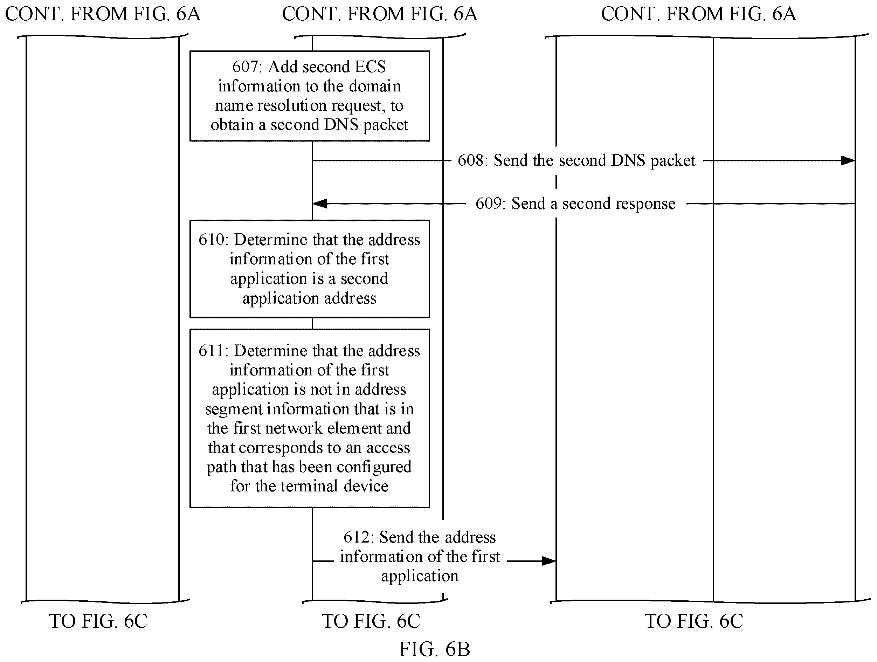

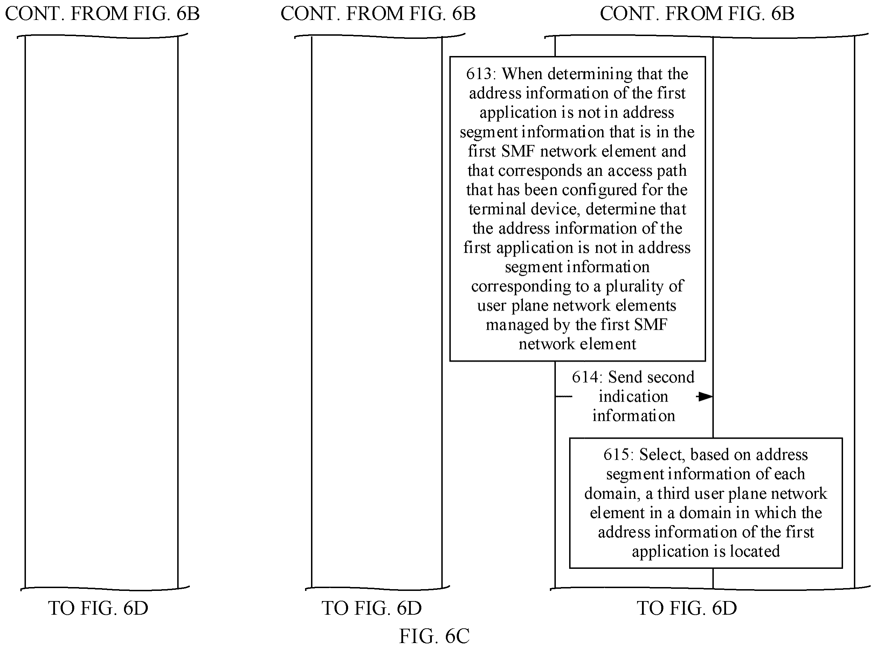

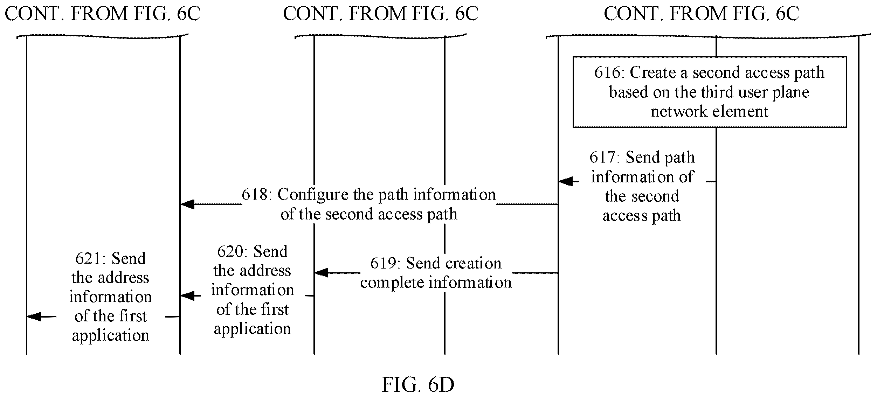

Based on the application addressing method provided in the embodiment shown in Situation 1, this application further provides an instance of a communication system for application addressing. As shown in FIG. 5, a communication system includes a terminal device, a RAN device, a PSA, a local network, a first DNS server, a first SMF network element, a first network element, a first user plane network element, a second user plane network element, a second SMF network element, a second DNS server, a third SMF network element, and a third user plane network element. As shown in FIG. 5, the first network element is an EASDF network element, and the first network element and the first SMF network element manage/serve a same domain. FIG. 6A to FIG. 6D are a flowchart of the instance. The method includes the following steps.

Step 601: The terminal device sends a domain name resolution request. The second user plane network element receives the domain name resolution request. The domain name resolution request is used to obtain address information that is of a first application and that is requested by the terminal device, and a destination address of the domain name resolution request is an address of the first network element.

In some embodiments, before sending the domain name resolution request, the terminal device has established a user plane connection to the user plane network element.

Step 602: The second user plane network element sends the domain name resolution request to the first network element. The first network element receives the domain name resolution request.

Step 603: The first network element adds first ECS information to the domain name resolution request, to obtain a first DNS packet.

Step 604: The first network element sends the first DNS packet to the first DNS server. The first DNS server receives the first DNS packet.

Step 605: The first DNS server sends a first response to the first network element. The first network element receives the first response.

The first response carries a query result obtained by the first DNS server through local query or by querying a higher-level DNS server.

Step 606: When the first response does not carry a first application address, the first network element determines that the address information of the first application is not in address segment information corresponding to a user plane network element managed by the first SMF network element.

The address segment information corresponding to the user plane network element managed by the first SMF network element may be locally configured for the first network element, or may be configured by the first SMF network element for the first network element.

Step 607: The first network element adds second ECS information to the domain name resolution request, to obtain a second DNS packet.

Step 608: The first network element sends the second DNS packet to the second DNS server. The second DNS server receives the second DNS packet.

Step 609: The second DNS server sends a second response to the first network element. The first network element receives the second response sent by the second DNS server. The second response carries a second application address.

Step 610: The first network element determines that the address information of the first application is the second application address.

Step 611: The first network element determines that the address information of the first application is not in address segment information that is in the first network element and that corresponds to an access path that has been configured for the terminal device.

Step 612: The first network element sends the address information of the first application to the first SMF network element. The first SMF network element receives the address information of the first application.

Step 613: When determining that the address information of the first application is not in address segment information that is in the first SMF network element and that corresponds an access path that has been configured for the terminal device, the first SMF information determines that the address information of the first application is not in address segment information corresponding to a plurality of user plane network elements managed by the first SMF network element.

Step 614: The first SMF network element sends second indication information to the second SMF network element. The second SMF network element receives the second indication information. The second indication information is used to trigger the second SMF network element to select, for the terminal device, a user plane network element corresponding to the address information of the first application.

In some embodiments, the second indication information includes tunnel information of the second user plane.

Step 615: The second SMF network element selects, based on address segment information of each domain, a third user plane network element in a domain in which the address information of the first application is located.

Step 616: The second SMF network element creates a second access path based on the third user plane network element.

Step 617: The second SMF sends path information of the second access path to the first SMF network element. The first SMF network element receives the path information of the second access path.

Step 618: The first SMF network element configures the path information of the second access path for the second user plane network element.

Step 619: The first SMF network element sends creation complete information to the first network element. The first network element receives the creation complete information. The creation complete information indicates that creation of the second access path is completed.

Step 620: The first network element sends the address information of the first application to the second user plane network element. The second user plane network element receives the address information of the first application from the first network element.

Step 621: The second user plane network element sends the address information of the first application to the terminal device. The terminal device receives the address information that is of the first application and that is sent by the second user plane network element.

In some embodiments, the terminal device may exchange data with the first application through the second access path based on the received address information of the first application.

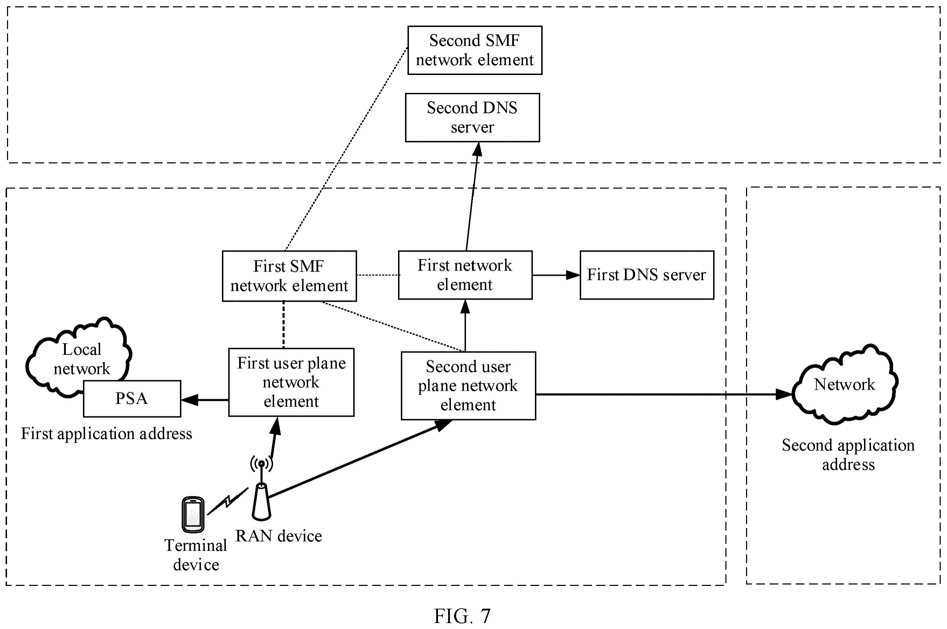

In addition, when the second SMF network element determines, based on the tunnel information of the second user plane network element included in the second indication information, that the second user plane network element can access the address information of the first application through an N6 interface, the second SMF network element may directly create the second access path without selecting the third user plane network element. As shown in FIG. 7, the second access path is that the second user plane network element directly accesses the second application address through the N6 interface.

Based on the instances shown in FIG. 5, FIG. 6A to FIG. 6D, and FIG. 7, when determining that the address information of the first application is not in the address segment information corresponding to the user plane network element managed by the first SMF network element, the first network element sends the address information of the first application to the first SMF network element. The first SMF network element sends the second indication information to the second SMF network element, so that the second SMF network element selects, for the terminal device, the user plane network element corresponding to the address information of the first application, thereby reducing signaling sent to the SMF network element.

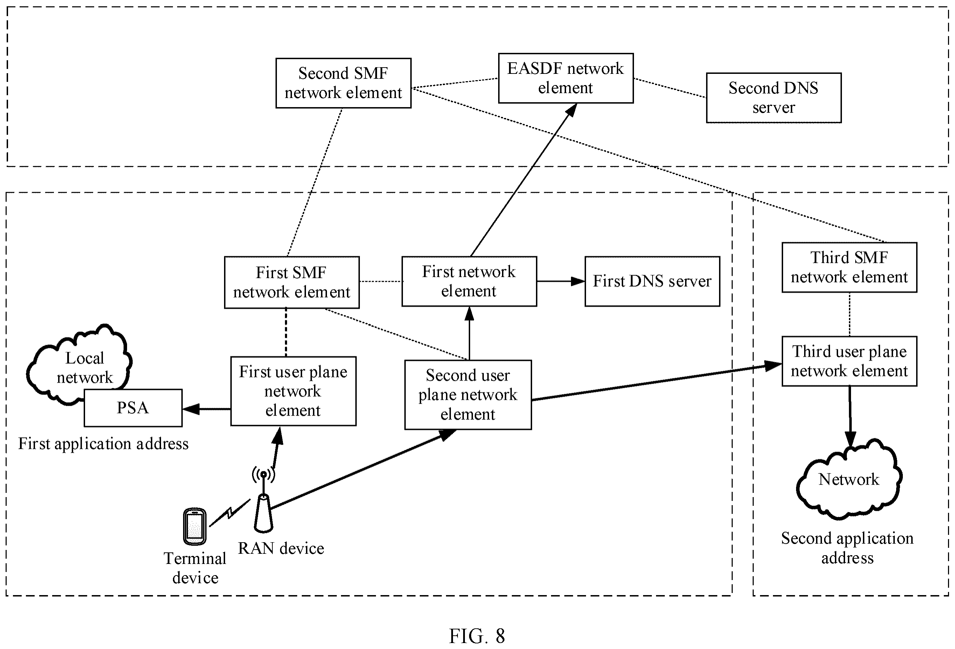

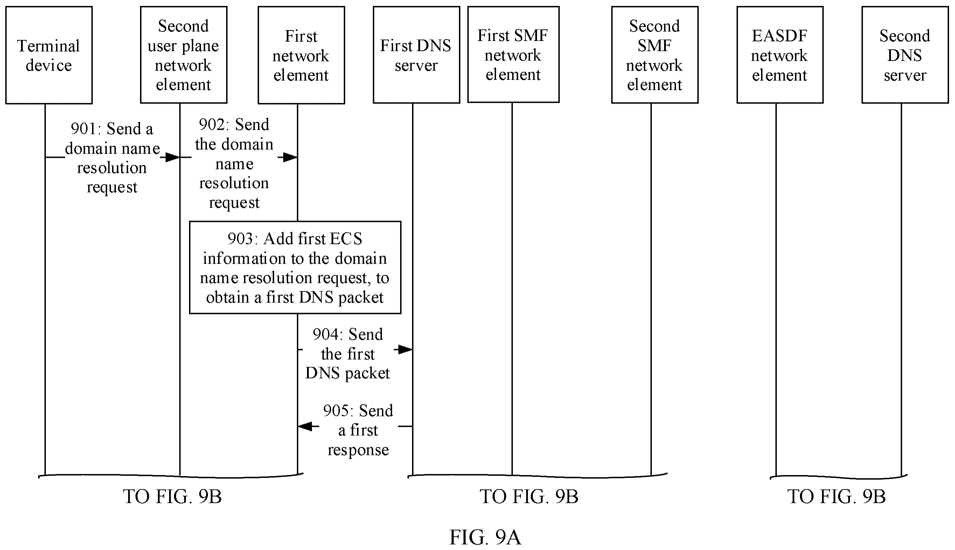

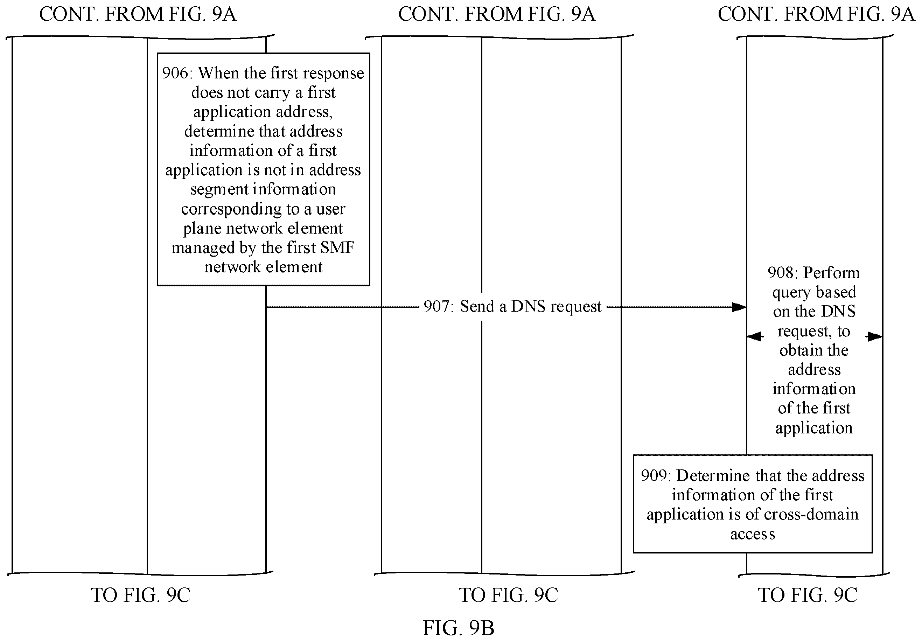

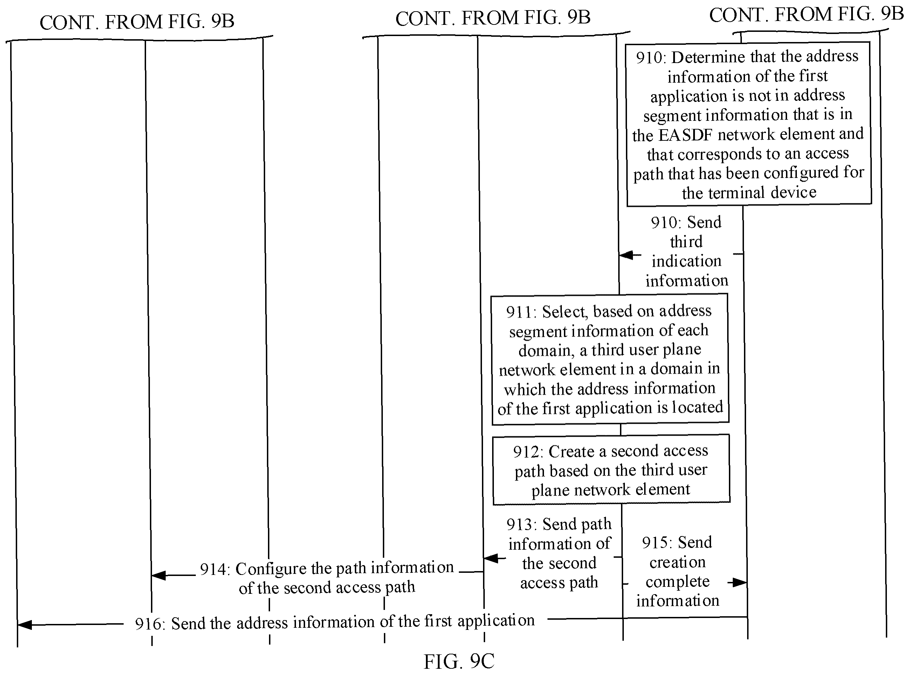

The embodiments corresponding to FIG. 5 and FIG. 6A to FIG. 6D are content of describing application addressing in Case 2 based on Situation 1. In addition, a corresponding embodiment in the foregoing embodiment further includes Situation 2: The first network element determines the address information of the first application via the EASDF network element. The following specifically describes, with reference to FIG. 8 and FIG. 9A to FIG. 9C, the application addressing method in Case 2 based on content in Situation 2.

Situation 2: The first network element determines the address information of the first application via the EASDF network element.

The first network element may send a DNS request to the EASDF network element. The DNS request is generated based on a domain name resolution request.

In some implementations, the DNS request may include third ECS information. The third ECS information represents a location of the terminal device or a location of the first network element.

The EASDF network element queries the second DNS server based on the received DNS request, to obtain the address information of the first application. The address information of the first application may be a second application address.

After determining the address information of the first application, the EASDF network element may send a DNS response to a source address of the DNS request, to notify the source address of the address information of the first application.

For example, the source address of the DNS request may be an address of the terminal device, or may be an address of the first network element. The following describes application addressing based on the foregoing two DNS request configuration manners.

Manner 1: The source address of the DNS request is the address of the first network element.

In this case, the third ECS information in the DNS request represents the location of the terminal device.

The EASDF network element sends the DNS response to the first network element, and the first network element receives the DNS response.

The first network element determines the address information of the first application based on the received DNS response. A subsequent execution process of the first network element is the same as the subsequent execution process of determining the address information of the first application by the first network element in Situation 1. Details are not described herein again.

Manner 2: The source address of the DNS request is the address of the terminal device.

In this case, the third ECS information in the DNS request represents the location of the terminal device or the location of the first network element.

Before sending the DNS response to the terminal device, the EASDF network element may determine, based on preconfigured cross-domain address segment information, that the address information of the first application accessed by the terminal device is of cross-domain access.

The cross-domain address segment information may be locally configured for the EASDF network element, or may be configured by the second SMF network element for the EASDF network element.

Optionally, after determining the cross-domain access, the EASDF network element may determine whether the address information of the first application is in address segment information that is in the EASDF network element and that corresponds to an access path that has been configured for the terminal device.

When the address information of the first application is not in the address segment information that is in the EASDF network element and that corresponds to the access path that has been configured for the terminal device, the EASDF network element may send third indication information to the second SMF network element. The third indication information indicates the second SMF network element to select, for the terminal device, the third user plane network element corresponding to the address information of the first application. The third indication information may include but is not limited to the address information of the first application, address segment information corresponding to the address information of the first application, and an identifier of the terminal device.

A process in which the second SMF network element creates a second access path for the terminal device after receiving the third indication information is the same as the process in which the second SMF network element creates the second access path for the terminal device after receiving the second indication information in Situation 1. Details are not described herein again.

After creation of the second access path is completed, the second SMF network element may send creation complete information to the EASDF network element. The creation complete information may include address segment information corresponding to the second access path. After receiving the creation complete information, the EASDF network element may record the address segment information corresponding to the second access path.

The EASDF network element sends the DNS response to the terminal device, to notify the terminal device of the address information of the first application. The terminal device may exchange data with the first application through the second access path based on the address information of the first application.

Based on the application addressing method provided in the embodiment shown in Manner 2 in Situation 2, this application further provides an instance of a communication system for application addressing. As shown in FIG. 8, the communication system includes a terminal device, a RAN device, a PSA, a local network, a first DNS server, a first SMF network element, a first network element, a first user plane network element, a second user plane network element, a second SMF network element, a second DNS server, an EASDF network element, a third SMF network element, and a third user plane network element. As shown in FIG. 8, the first network element is an EASDF network element, and the first network element and the first SMF network element manage/serve a same domain. FIG. 9A to FIG. 9C are a flowchart of the instance. The method includes the following steps.

Step 901: The terminal device sends a domain name resolution request. The second user plane network element receives the domain name resolution request. The domain name resolution request is used to obtain address information that is of a first application and that is requested by the terminal device, and a destination address of the domain name resolution request is an address of the first network element.

In some embodiments, before sending the domain name resolution request, the terminal device has established a user plane connection to the user plane network element.

Step 902: The second user plane network element sends the domain name resolution request to the first network element. The first network element receives the domain name resolution request.

Step 903: The first network element adds first ECS information to the domain name resolution request, to obtain a first DNS packet.

Step 904: The first network element sends the first DNS packet to the first DNS server. The first DNS server receives the first DNS packet.

Step 905: The first DNS server sends a first response to the first network element. The first network element receives the first response.

The first response carries a query result obtained by the first DNS server through local query or by querying a higher-level DNS server.

Step 906: When the first response does not carry a first application address, the first network element determines that the address information of the first application is not in address segment information corresponding to a user plane network element managed by the first SMF network element.

Step 907: The first network element sends a DNS request to the EASDF network element. The EASDF network element receives the DNS request.

A source address of the DNS request is an address of the terminal device.

Step 908: The EASDF network element queries the second DNS server based on the DNS request, to obtain the address information of the first application.

The address information of the first application may be a second application address.

Step 909: The EASDF network element determines, based on preconfigured cross-domain address segment information, that the address information of the first application accessed by the terminal device is of cross-domain access.

Step 910: When determining that the address information of the first application is not in address segment information that is in the EASDF network element and that corresponds to an access path that has been configured for the terminal device, the EASDF network element sends third indication information to the second SMF network element.

The third indication information indicates the second SMF network element to select, for the terminal device, the third user plane network element corresponding to the address information of the first application. The third indication information may include but is not limited to the address information of the first application, address segment information corresponding to the address information of the first application, and an identifier of the terminal device.

Step 911: The second SMF network element selects, based on address segment information of each domain, a third user plane network element in a domain in which the address information of the first application is located.

Step 912: The second SMF network element creates a second access path based on the third user plane network element.

Step 913: The second SMF sends path information of the second access path to the first SMF network element. The first SMF network element receives the path information of the second access path.

Step 914: The first SMF network element configures the path information of the second access path for the second user plane network element.

Step 915: The second SMF network element sends creation complete information to the EASDF network element. The EASDF network element receives the creation complete information. The creation complete information indicates that creation of the second access path is completed.

Step 916: The EASDF network element sends the address information of the first application to the terminal device. The terminal device receives the address information of the first application.

In some embodiments, the terminal device may exchange data with the first application through the second access path based on the received address information of the first application.

Based on the instances shown in FIG. 8 and FIG. 9A to FIG. 9C, when determining that the address information of the first application is not in the address segment information corresponding to the user plane network element managed by the first SMF network element, the first network element sends the DNS request to the EASDF network element, and the EASDF network element determines the address information of the first application. In addition, the EASDF network element sends the third indication information to the second SMF network element, so that the second SMF network element selects, for the terminal device, the user plane network element corresponding to the address information of the first application, thereby reducing signaling sent to the SMF network element.

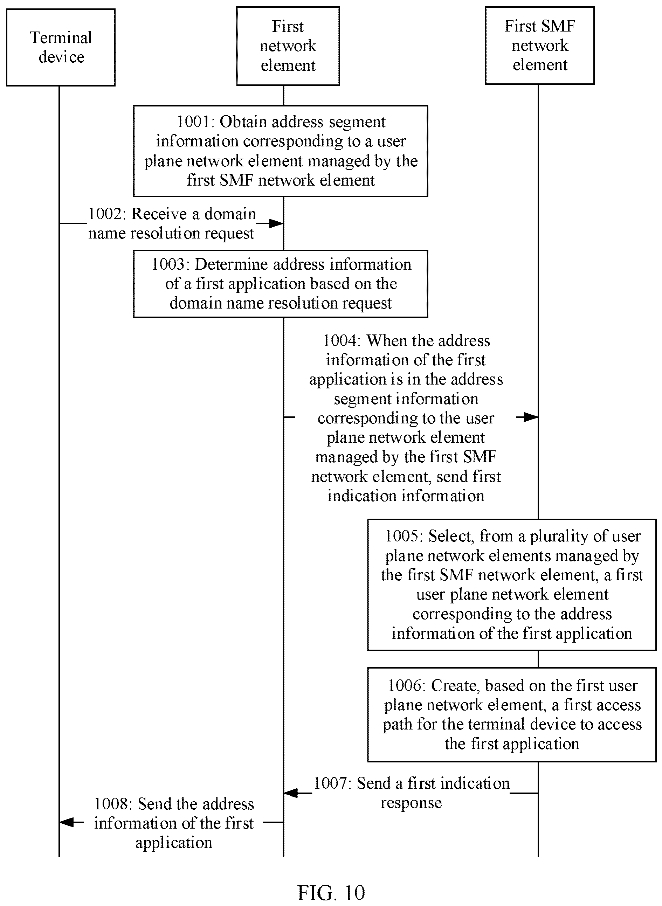

Based on the application addressing method provided in the embodiment shown in FIG. 2, this application further provides an instance of the application addressing method. FIG. 10 is a complete schematic flowchart of an application addressing method according to an embodiment of this application. For example, address information of a first application is in address segment information corresponding to a user plane network element managed by a first session management network element. The method includes the following steps.

Step 1001: A first network element obtains the address segment information corresponding to the user plane network element managed by the first session management network element.

Step 1002: The first network element receives a domain name resolution request from a terminal device.

The domain name resolution request is used to obtain the address information that is of the first application and that is requested by the terminal device.

Step 1003: The first network element determines the address information of the first application based on the domain name resolution request.

Step 1004: When the address information of the first application is in the address segment information corresponding to the user plane network element managed by the first SMF network element, the first network element sends first indication information to the first SMF network element. The first SMF network element receives the first indication information.

The first indication information is used to trigger the first SMF network element to select, for the terminal device, a user plane network element corresponding to the address information of the first application.

Step 1005: The first SMF network element selects, from a plurality of user plane network elements managed by the first SMF network element, a first user plane network element corresponding to the address information of the first application.

Step 1006: The first SMF network element creates, based on the first user plane network element, a first access path for the terminal device to access the first application.

Step 1007: The first SMF network element sends a first indication response to the first network element. The first network element receives the first indication response.

The first indication response indicates that creation of the first access path is completed, and the first indication response may include address segment information corresponding to the first access path.

Step 1008: The first network element sends the address information of the first application to the terminal device.

In the embodiment shown in FIG. 10, when determining that the address information of the first application is in the address segment information corresponding to the user plane network element managed by the first SMF network element, the first network element sends the first indication information to the first SMF network element to create the first access path, thereby reducing signaling sent to the SMF network element.

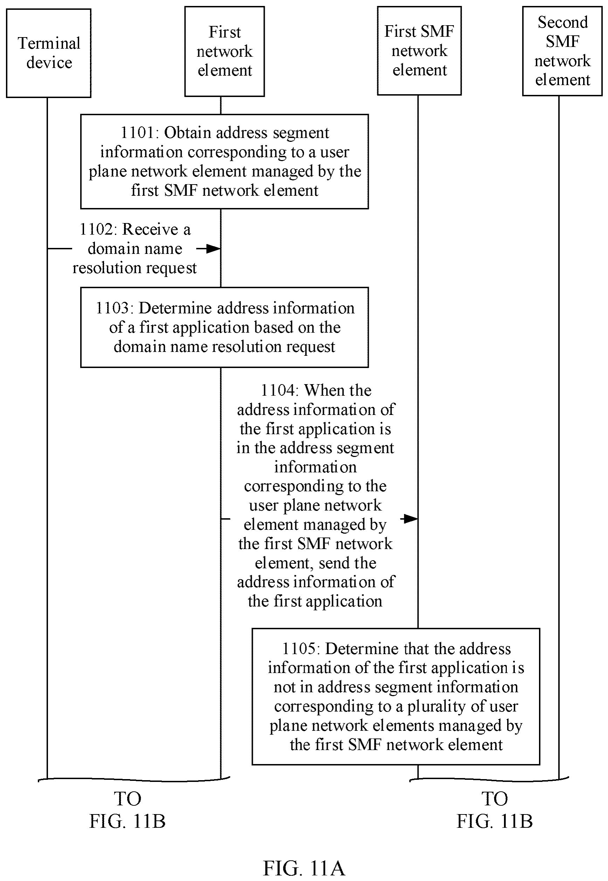

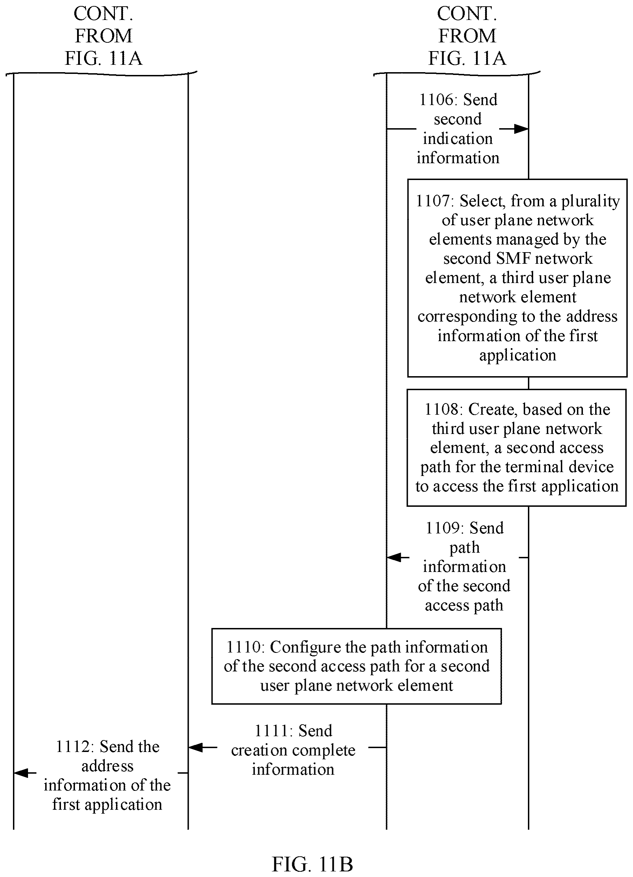

Based on the application addressing method provided in the embodiment shown in FIG. 2, this application further provides an instance of the application addressing method. FIG. 11A and FIG. 11B are a complete schematic flowchart of another application addressing method according to an embodiment of this application. For example, address information of a first application is not in address segment information corresponding to a user plane network element managed by a first session management network element. The method includes the following steps.

Step 1101: A first network element obtains the address segment information corresponding to the user plane network element managed by the first session management network element.

Step 1102: The first network element receives a domain name resolution request from a terminal device.

The domain name resolution request is used to obtain the address information that is of the first application and that is requested by the terminal device.

Step 1103: The first network element determines the address information of the first application based on the domain name resolution request.

Step 1104: When the address information of the first application is not in the address segment information corresponding to the user plane network element managed by the first SMF network element, the first network element sends the address information of the first application to the first SMF network element. The first SMF network element receives the address information of the first application.

Step 1105: The first SMF network element determines that the address information of the first application is not in address segment information corresponding to a plurality of user plane network elements managed by the first SMF network element.

Step 1106: The first SMF network element sends second indication information to a second SMF network element. The second SMF network element receives the second indication information.

The second indication information is used to trigger the second SMF network element to select, for the terminal device, a user plane network element corresponding to the address information of the first application. The second indication information includes tunnel information of a second user plane network element.

Step 1107: The second SMF network element selects, from a plurality of user plane network elements managed by the second SMF network element, a third user plane network element corresponding to the address information of the first application.

Step 1108: The second SMF network element creates, based on the third user plane network element, a second access path for the terminal device to access the first application.

Step 1109: The second SMF network element sends path information of the second access path to the first SMF network element. The first SMF network element receives the path information of the second access path.

The path information includes tunnel information of the third user plane network element and address segment information corresponding to the second access path.

Step 1110: The first SMF network element configures the path information of the second access path for the second user plane network element.

Step 1111: The first SMF network element sends creation complete information to the first network element. The first network element receives the creation complete information.

The creation complete information indicates that creation of the second access path is completed. The creation complete information may include the address segment information corresponding to the second access path.

Step 1112: The first network element sends the address information of the first application to the terminal device. The terminal device receives the address information of the first application.

In the embodiment shown in FIG. 11A and FIG. 11B, when determining that the address information of the first application is not in the address segment information corresponding to the user plane network element managed by the first SMF network element, the first network element sends the address information of the first application to the first SMF network element. The first SMF network element sends the second indication information to the second SMF network element, so that the second SMF network element creates the second access path, thereby reducing sending of signaling that triggers an access path.

### Embodiment 2

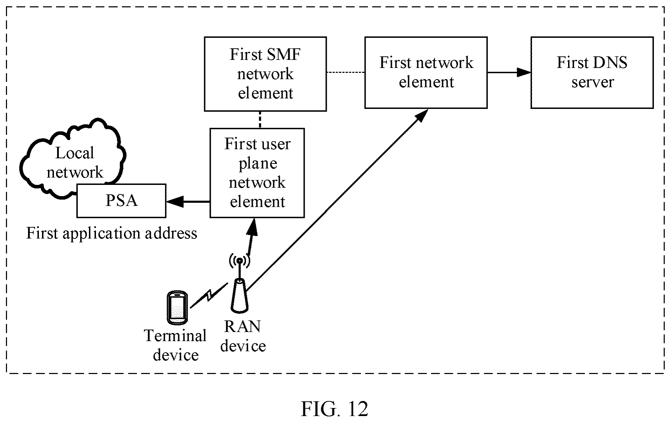

This application further provides an instance of a communication system for application addressing. As shown in FIG. 12, the communication system includes a terminal device, a RAN device, a PSA, a local network, a first DNS server, a first SMF network element, a first network element, and a first user plane network element. As shown in FIG. 12, the first network element may be an EASDF network element, or may be a second user plane network element. The first network element and the first SMF network element manage/serve a same domain.

In the communication system, the terminal device has created a tunnel from the RAN to the first user plane network element and a tunnel from the first user plane network element to the first network element.

The terminal device sends a domain name resolution request. After receiving the domain name resolution request, the first user plane network element sends the domain name resolution request to the first network element. The first network element queries the first DNS server based on the received domain name resolution request, to obtain a first response. After obtaining the first response, the first network element may subsequently create an access path based on the content in Embodiment 1. For details, refer to the content in Embodiment 1. Details are not described herein again.

### Embodiment 3

Based on the content in Embodiment 1, the terminal device obtains the address information of the first application. The address information of the first application is the first application address.

When the terminal device sends the first packet to the first application based on the first application address, the first application may send a redirected address, namely, a third application address to the terminal device through an application layer. The terminal device sends a second packet to the third application address. The second user plane network element receives the second packet.

In some embodiments, the second user plane network element may trigger, based on the address information of the first application, an SMF network element to create a third access path for the third application address.

After receiving the second packet, the second user plane network element determines that a destination address of the second packet is the third application address. The second user plane network element may determine whether the second user plane network element has a forwarding policy for the destination address of the second packet. For example, the second user plane network element may determine whether the third application address is in address segment information corresponding to a configured forwarding policy of the second user plane network element.

When the third application address is not in the address segment information corresponding to the configured forwarding policy of the second user plane network element, the second user plane network element determines whether the third application address is an in-domain address or an out-of-domain address.

For example, when the third application address is in the address segment information corresponding to the user plane network element managed by the first SMF network element, the third application address is an in-domain address. When the third application address is not in the address segment information corresponding to the user plane network element managed by the first SMF network element, the third application address is an out-of-domain address.

In some embodiments, when the third application address is the in-domain address, the second user plane network element may send fourth indication information to the first SMF network element, to indicate the first SMF network element to create, for the terminal device, the third access path for accessing the third application address.

The fourth indication information may include the third application address or address segment information corresponding to the third application address.

The second user plane network element may further send the second packet to the first SMF network element, and the first SMF network element may buffer the received second packet.

After receiving the fourth indication information, the first SMF network element may select a fourth user plane network element corresponding to the third application address from the plurality of user plane network elements managed by the first SMF network element, and create the third access path based on the selected fourth user plane network element. A process in which the first SMF network element creates the third access path after receiving the fourth indication information is the same as the process in which the first SMF network element creates the first access path after receiving the first indication information in Embodiment 1. For a specific execution process, refer to the content in Embodiment 1. Details are not described herein again.

In some embodiments, when the third application address is the out-of-domain address, the second user plane network element may send the third application address to the first SMF network element. After receiving the third application address, the first SMF network element determines whether the third application address is in the address segment information corresponding to the user plane network element managed by the first SMF network element.

The first SMF network element may first determine whether the third application address is in the address segment information that is in the first SMF network element and that corresponds to the access path that has been configured for the terminal device. When the third application address is not in the address segment information that is in the first SMF network element and that corresponds to the access path that has been configured for the terminal device, the first SMF network element determines whether the third application address is in the address segment information corresponding to the user plane network element managed by the first SMF network element.

When the third application address is not in the address segment information corresponding to the user plane network element managed by the first SMF network element, the first SMF network element determines that the third application address is for out-of-domain access, and may send fifth indication information to the second SMF network element, to indicate the second SMF network element to create the third access path for the third application address.

The fifth indication information may include the third application address or the address segment information corresponding to the third application address, and may further include the tunnel information of the second user plane network element.

A process in which the second SMF network element creates the third access path is the same as the process in which the second SMF network element creates the second access path in Embodiment 1. Details are not described herein again.

The second SMF network element may send path information of the third access path to the first SMF network element, so that the first SMF network element may configure a forwarding policy of the third access path for the second user plane network element based on the path information of the third access path. The first SMF network element may send creation complete information to the second user plane network element, to notify the second user plane network element that creation of the third access path is completed.

In some embodiments, when triggering, based on the address information of the first application, the SMF network element to create the third access path for the third application address, the second user plane network element may buffer the second packet, or may send the second packet to the first SMF network element. After receiving the second packet, the first SMF network element may buffer the second packet.

After creation of the third access path is completed, when the first SMF network element buffers the second packet sent by the second user plane network element, the first SMF network element may directly send the second packet to the third application address.

In some embodiments, when the second user plane network element buffers the second packet, after receiving a third indication response, the second user plane network element may send the second packet to the third application address. Subsequently, the terminal device may exchange, based on the third access path, data with the first application corresponding to the third application address.

Based on the content in Embodiment 3, the second user plane network element may trigger, based on the redirected address information obtained in a redirection manner, the SMF network element to create an access path for the terminal device to access the redirected address information. In conclusion, in Embodiment 3, an access path may be created in a non-DNS addressing manner.

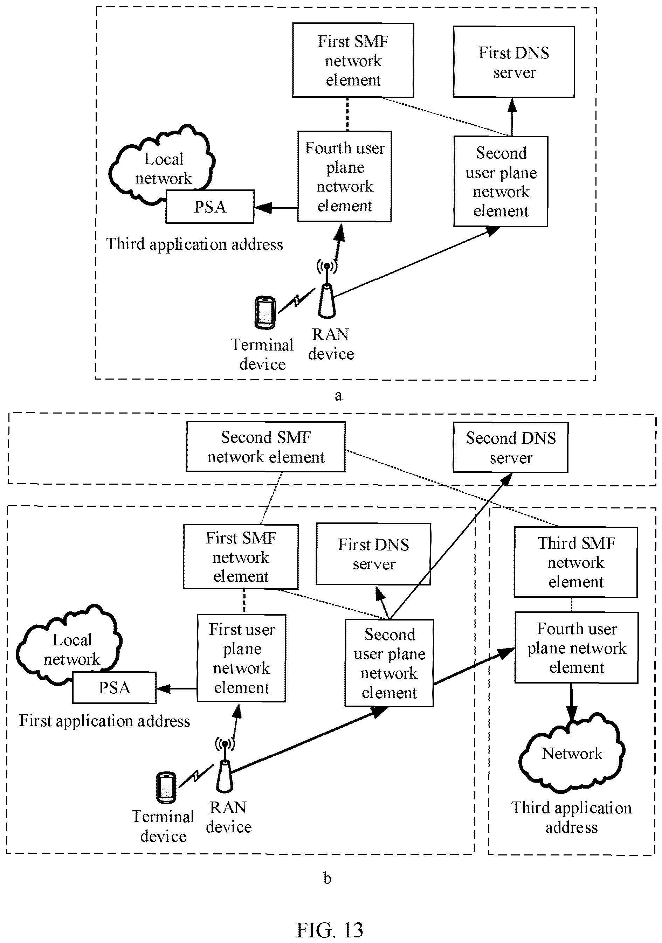

Based on the content in Embodiment 3, this application further provides an instance of a communication system for application addressing. As shown in FIG. 13, a communication system in a includes but is not limited to a terminal device, a RAN device, a PSA, a local network, a first DNS server, a first SMF network element, a second user plane network element, and a fourth user plane network element. A communication system shown in b includes but is not limited to a terminal device, a RAN device, a PSA, a local network, a first DNS server, a first SMF network element, a second user plane network element, a fourth user plane network element, a second SMF network element, a UL CL, and a second DNS server.

As shown in FIG. 13, after receiving a second packet, the second user plane network element determines that a destination address of the second packet is a third application address. The second user plane network element may trigger, based on the determined destination address of the second packet, the SMF network element to create a third access path for the third application address. a in FIG. 13 shows the third access path created by the first SMF network element when the third application address is an in-domain address, and b in FIG. 13 shows the third access path created by the first SMF network element when the third application address is an out-of-domain address.

In some embodiments, as shown in FIG. 13, the communication system in a includes but is not limited to the terminal device, the RAN device, the PSA, the local network, the first DNS server, the first SMF network element, the second user plane network element, and the fourth user plane network element.

Based on the content in Embodiment 3, this application further provides an instance of application addressing. When the third application address is the in-domain address, that the second user plane network element triggers the first SMF network element to create the third access path may include the following steps.

B1: The terminal device sends the first packet to the first application. The first application receives the first packet.

B2: The first application sends the redirected address, namely, the third application address to the terminal device through the application layer. The terminal device receives the third application address obtained through redirection to the first application.

The third application address is the redirected address of the first application, and may be address information determined in a manner such as redirection.

B3: The terminal device sends the second packet to the second user plane network element. The second user plane network element receives the second packet sent by the terminal device.

The destination address of the second packet is the third application address.

B4: The second user plane network element determines that the third application address is not in the address segment information corresponding to the configured forwarding policy of the second user plane network element.

B5: The second user plane network element obtains the address segment information corresponding to the user plane network element managed by the first SMF network element.

B6: The second user plane network element determines that the third application address is in the address segment information corresponding to the user plane network element managed by the first SMF network element.

B4 and B5 may not be performed. For example, the first SMF network element sends, to the second user plane network element in advance, the address segment information corresponding to the user plane network element managed by the first SMF network element. Further, after obtaining the third application address, the second user plane network element may determine that the third application address is in the address segment information corresponding to the user plane network element managed by the first SMF network element.

B7: The second user plane network element may send the fourth indication information to the first SMF network element, to indicate the first SMF network element to create the third access path for the terminal device to access the third application address.

The fourth indication information may include the third application address, or may include the address segment information corresponding to the third application address.

B8: The second user plane network element may further send the received second packet to the first SMF network element. The first SMF network element receives and buffers the second packet. The second user plane network element may send the fourth indication information in B7 and the second packet together to the first SMF network element, or may separately send the fourth indication information and the second packet. This is not limited in the present invention.

In another scenario, the second user plane network element may further buffer the second packet.

B9: When determining that the third application address is in the address segment information corresponding to the user plane network element managed by the first SMF network element, the first SMF network element determines that the third application address is the in-domain address.

B10: The first SMF network element may select, from the plurality of user plane network elements managed by the first SMF network element, the fourth user plane network element corresponding to the third application address.

The first SMF network element may not perform the step described in B9, but directly selects the fourth user plane network element corresponding to the third application address from the plurality of user plane network elements managed by the first SMF network element. This is not limited in the present invention.

B11: The first SMF network element creates the third access path based on the fourth user plane network element.

In some embodiments, the first SMF network element may configure the forwarding policy of the third access path for the fourth user plane network element. The forwarding policy is that the fourth user network element sends, to the local network, a packet whose destination address is the third application address or the address segment information corresponding to the third application address.

The third access path may be a tunnel between the RAN, the fourth user plane network element, and the local network or the PSA in a in FIG. 13.

B12: The first SMF network element may send an indication response corresponding to the fourth indication information to the second user plane network element, to notify the second user plane network element that creation of the third access path is completed.

The response corresponding to the fourth indication information may include address segment information corresponding to the third access path.

B13: After completing creation of the third access path, the first SMF network element may send the buffered second packet to the fourth user plane network element.

In another scenario (not shown in a in FIG. 13), when the second user plane network element does not send the second packet to the first SMF network element, but buffers the second packet, after receiving a fourth indication response, the second user plane network element may send the second packet to the fourth user plane network element.

B14: After receiving the second packet sent by the first SMF network element, the fourth user plane network element may forward the second packet to the local network.

Based on the content of steps B1 to B14, when the second user plane network element addresses the address information obtained in the non-DNS manner, when the address information is the in-domain address, the first SMF network element may be triggered to create the third access path for accessing the address information.

As shown in FIG. 13, the communication system in b includes but is not limited to the terminal device, the RAN device, the PSA, the local network, the first DNS server, the first SMF network element, the second user plane network element, the fourth user plane network element, the second SMF network element, the UL CL, and the second DNS server.

Based on the content in Embodiment 3, this application further provides an instance of application addressing. When the third application address is the out-of-domain address, that the second user plane network element triggers the SMF network element to create the third access path may include the following steps.

C1: The terminal device sends the first packet to the first application. The first application receives the first packet.

C2: The first application sends the redirected address, namely, the third application address to the terminal device through the application layer. The terminal device receives the third application address obtained through redirection to the first application.

The third application address is the redirected address of the first application, and may be address information determined in a manner such as redirection.

C3: The terminal device sends the second packet to the second user plane network element. The second user plane network element receives the second packet sent by the terminal device.

The destination address of the second packet is the third application address.

C4: The second user plane network element determines that the third application address is not in the address segment information corresponding to the configured forwarding policy of the second user plane network element.

In some embodiments, the second user plane network element may buffer the received second packet, and send the second packet after creation of the access path for accessing the third application address is completed.

In another scenario, the second user plane network element may send the second packet to the first SMF network element, and the first SMF network element buffers the second packet. Alternatively, when subsequently performing C7, the second user plane network element may send the second packet and information about the third application address to the first SMF network element. This is not limited in the present invention.

C5: The second user plane network element obtains the address segment information corresponding to the user plane network element managed by the first SMF network element.

C6: When determining that the third application address is not in the address segment information corresponding to the user plane network element managed by the first SMF network element, the second user plane network element determines that the third application address is the out-of-domain address.

C4 and C5 may not be performed. For example, the first SMF network element sends, to the second user plane network element in advance, the address segment information corresponding to the user plane network element managed by the first SMF network element. Further, after obtaining the third application address, the second user plane network element may determine that the third application address is not in the address segment information corresponding to the user plane network element managed by the first SMF network element.

C7: The second user plane network element may send the third application address to the first SMF network element, to trigger the first SMF network element to create the third access path for the terminal device to access the third application address. The first SMF network element receives the third application address.

C8: When determining that the third application address is not in the address segment information that is in the first SMF network element and that corresponds to the access path that has been configured for the terminal device, the first SMF network element determines that the third application address is not in the address segment information corresponding to the plurality of user plane network elements managed by the first SMF network element.

C9: The first SMF network element may send the fifth indication information to the second SMF network element, to indicate the second SMF network element to create the third access path for the third application address. The second SMF network element receives the fifth indication information.

The fifth indication information may include the third application address or the address segment information corresponding to the third application address, and may further include the tunnel information of the second user plane network element.

The first SMF network element may not perform the step described in C8, but directly send the fifth indication information to the second SMF network element. This is not limited in the present invention.

C10: The second SMF network element selects, based on the address segment information of each domain, a fourth user plane network element in a domain in which the third application address is located.

C11: The second SMF network element creates the third access path based on the fourth user plane network element.

In some embodiments, the second SMF network element may send a session creation/modification request to the fourth user plane network element. The request includes the third application address and the tunnel information of the second user plane network element. After receiving the request, the fourth user plane network element creates a tunnel from the fourth user plane network element to the third application address or the address segment information corresponding to the third application address. After creation of the tunnel is completed, the fourth user plane network element may return tunnel information of the fourth user plane network element to the second SMF network element.

For an execution process of C10 and C11, there is another scenario. In another scenario, the second SMF network element may further select, based on the address segment information of each domain, a third SMF network element in a domain in which the third application address is located, and the third SMF network element selects the fourth user plane network element corresponding to the third application address. The second SMF network element may send a session creation/modification request to the third SMF network element. The request may include the third application address or the address segment information corresponding to the third application address, and may further include the tunnel information of the second user plane network element. After receiving the request, the third SMF network element creates the second access path based on the fourth user plane network element. After the second access path is created, the third SMF network element returns tunnel information of the fourth user plane to the second SMF network element.

C12: The second SMF network element sends the path information of the third access path to the first SMF network element. The first SMF network element receives the path information of the third access path.

The path information of the third access path includes the tunnel information of the fourth user plane network element and the address segment information corresponding to the second access path. For example, the address segment information corresponding to the third access path may be the third application address, or may be the address segment information corresponding to the third application address.

C13: The first SMF network element configures the path information of the third access path for the second user plane network element.

In some embodiments, the first SMF network element may configure the forwarding policy of the third access path for the second user plane network element based on the path information of the third access path. The forwarding policy of the third access path is as follows: The second user plane network element sends, to the fourth user plane network element, a packet whose destination address is the third application address or the address segment information corresponding to the third application address.

The first SMF network element may further send the creation complete information to the second user plane network element, to notify the second user plane network element that creation of the third access path is completed.

The third access path may be a tunnel between the RAN, the second user plane network element, the fourth user plane network element, and the network in b in FIG. 13.

C14: The second user plane network element may send the buffered second packet to the fourth user plane network element. The fourth user plane network element receives the second packet.

C15: The fourth user plane network element sends the second packet to the network.

In some embodiments, the terminal device may subsequently exchange, through the third access path, data with the first application corresponding to the third application address.

Based on the content of steps C1 to C15, when addressing the address information obtained in the non-DNS manner, the second user plane network element may send the address information to the first SMF network element when the address information is the out-of-domain address, and the first SMF network element triggers the second SMF network element to create the third access path for accessing the address information.

It may be understood that, in the foregoing embodiments, the methods and/or the steps implemented by the first network element, the first SMF network element, or the second SMF network element may alternatively be implemented by a component (for example, a chip or a circuit) that can be used in the first network element, the first SMF network element, or the second SMF network element.

The foregoing mainly describes the solutions provided in embodiments of this application from a perspective of interaction between each network element and the terminal device. Correspondingly, an embodiment of this application further provides a communication apparatus, and the communication apparatus is configured to implement the foregoing various methods. The communication apparatus may be the network element in the foregoing method embodiments, or an apparatus included in the foregoing network element, for example, a system chip. It may be understood that, to implement the foregoing functions, the communication apparatus includes a corresponding module, unit, or means (means) for implementing the foregoing methods. The module, unit, or means may be implemented by hardware, software, or hardware executing corresponding software. The hardware or software includes one or more modules or units corresponding to the foregoing functions. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used.

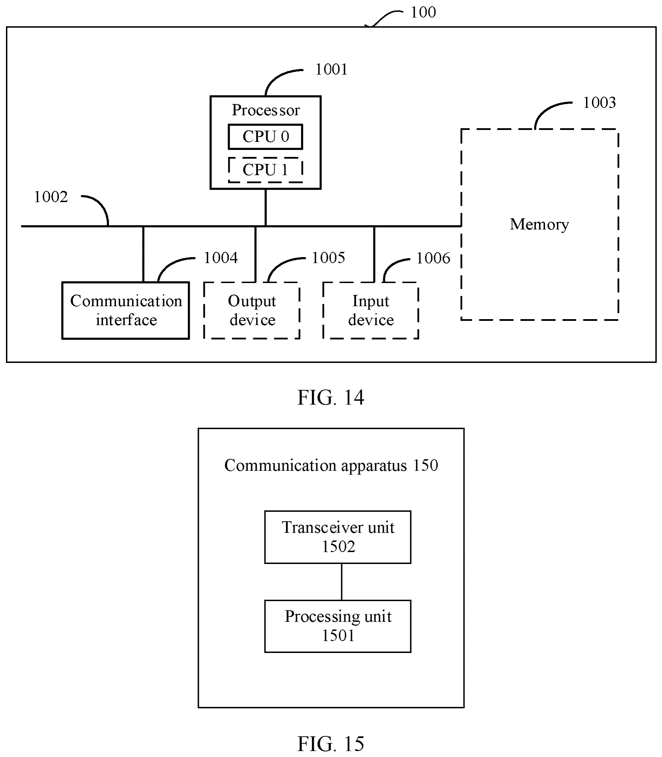

FIG. 14 is a diagram of a structure of a communication apparatus according to an embodiment of this application. A communication device 100 shown in FIG. 14 includes one or more processors 1001, a communication bus 1002, and at least one communication interface (in FIG. 14, an example in which the communication device 100 includes a communication interface 1004 and one processor 1001 is merely used for description). Optionally, the communication device 100 further includes a memory 1003.

The processor 1001 may be a general-purpose central processing unit (central processing unit, CPU), a microprocessor, an application-specific integrated circuit (application-specific integrated circuit, used for implementation), or one or more integrated circuits configured to control program execution of the solutions of this application.

The communication bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 14, but this does not mean that there is only one bus or only one type of bus. The communication bus 1002 is configured to connect different components in the communication device 100, so that the different components can communicate with each other.

The communication interface 1004 may be a transceiver module, configured to communicate with another device or a communication network, for example, the Ethernet, a radio access network (radio access network, RAN), or a wireless local area network (wireless local area network, WLAN). For example, the transceiver module may be an apparatus like a transceiver or a transceiver device. Optionally, the communication interface 1004 may alternatively be a transceiver circuit located in the processor 1001, and is configured to implement signal input and signal output of the processor.

The memory 1003 may be an apparatus having a storage function. For example, the memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently and is connected to the processor through the communication line 1002. The memory may alternatively be integrated with the processor.

The memory 1003 is configured to store computer instructions for performing the solution of this application, and the processor 1001 controls execution. The processor 1001 is configured to execute the computer instructions stored in the memory 1003, to implement the application addressing method provided in embodiments of this application.

Alternatively, optionally, in embodiments of this application, the processor 1001 may perform a processing-related function in the application addressing method provided in the following embodiments of this application, and the communication interface 1004 is responsible for communicating with another device or a communication network. This is not specifically limited in embodiments of this application.

Optionally, the computer instructions in embodiments of this application may also be referred to as application program code or instructions. This is not specifically limited in embodiments of this application.

During specific implementation, in an embodiment, the processor 1001 may include one or more CPUs such as a CPU 0 and a CPU 1 shown in FIG. 14.

During specific implementation, in an embodiment, the communication device 100 may include a plurality of processors, for example, the processor 1001 in FIG. 14. Each of the processors may be a single-core (single-CPU) processor, or may be a multi-core (multi-CPU) processor. The processor herein may be one or more devices, circuits, and/or processing cores configured to process data (for example, computer instructions).

During specific implementation, in an embodiment, the communication device 100 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive a user input in a plurality of manners. For example, the input device 1006 may be a mouse, a keyboard, a touchscreen device, or a sensor device.

In a possible implementation, the processor 1001 may invoke the computer instructions stored in the memory 1003, to enable the communication device 100 to perform the method performed by the first network element in the foregoing method embodiments. Therefore, for technical effect that can be achieved by this embodiment, refer to the foregoing method embodiments. Details are not described herein again.

In another possible implementation, the processor 1001 may invoke the computer instructions stored in the memory 1003, to enable the communication device 100 to perform the method performed by the first SMF network element in the foregoing method embodiments. Therefore, for technical effect that can be achieved by this embodiment, refer to the foregoing method embodiments. Details are not described herein again.

In another possible implementation, the processor 1001 may invoke the computer instructions stored in the memory 1003, to enable the communication device 100 to perform the method performed by the second SMF network element in the foregoing method embodiments. Therefore, for technical effect that can be achieved by this embodiment, refer to the foregoing method embodiments. Details are not described herein again.

FIG. 15 is a diagram of a structure of another communication apparatus according to an embodiment of this application. A communication apparatus 150 shown in FIG. 15 includes a processing unit 1501 and a transceiver unit 1502.

The transceiver unit 1502 may also be referred to as a transceiver module, and is configured to implement a sending and/or receiving function. For example, the transceiver unit 1502 may be a transceiver circuit, a transceiver device, a transceiver, or a communication interface. The processing unit 1501 may also be referred to as a processing module, for example, may be at least one processor. This is not limited.

In a possible design, the communication apparatus 150 may be configured to implement a function of the first network element in the method embodiment shown in FIG. 2, FIG. 4A and FIG. 4B, FIG. 6A to FIG. 6D, FIG. 8, FIG. 9A to FIG. 9C, FIG. 10, or FIG. 11A and FIG. 11B.

The processing unit 1501 is configured to obtain address segment information corresponding to a user plane network element managed by a first session management network element.

The transceiver unit 1502 is configured to: when address information of a first application is in the address segment information corresponding to the user plane network element managed by the first session management network element, send first indication information to the first session management network element.

The first indication information is used to trigger the first session management network element to select, for a terminal device, a user plane network element corresponding to the address information of the first application.

Optionally, the transceiver unit 1502 is configured to receive the address segment information that corresponds to the user plane network element managed by the first session management network element and that is sent by the first session management network element.

Optionally, the transceiver unit 1502 is configured to receive application information that is of the first application and that is sent by the first session management network element. The first application is an application corresponding to the user plane network element managed by the first session management network element, and the application information is used by the first network element to determine the first session management network element.

Optionally, the transceiver unit 1502 is configured to receive a domain name resolution request from the terminal device. The domain name resolution request is used to obtain the address information that is of the first application and that is requested by the terminal device. The processing unit 1501 determines the address information of the first application based on the domain name resolution request.

The transceiver unit 1502 is configured to: when the address information of the first application is not in the address segment information corresponding to the user plane network element managed by the first session management network element, send the address information of the first application to the first session management network element.

Optionally, the first network element is an edge application server discovery function network element or a user plane network element.

In another possible design, the communication apparatus 150 may be configured to implement a function of the first SMF network element in the method embodiment shown in FIG. 2, FIG. 4A and FIG. 4B, FIG. 6A to FIG. 6D, FIG. 8, FIG. 9A to FIG. 9C, FIG. 10, or FIG. 11A and FIG. 11B.

The transceiver unit 1502 is configured to receive first indication information from a first network element.

The first indication information is used to trigger the first session management network element to select, for a terminal device, a user plane network element corresponding to address information of a first application.

The processing unit 1501 is configured to select, from a plurality of user plane network elements managed by the first session management network element, a first user plane network element corresponding to the address information of the first application.

Optionally, the processing unit 1501 creates, based on the first user plane network element, a first access path for the terminal device to access the first application.

Optionally, the transceiver unit 1502 receives the address information of the first application from the first network element. The processing unit 1501 is configured to determine whether the address information of the first application is in address segment information of the plurality of user plane network elements managed by the first session management network element. If the address information of the first application is not in the address segment information, the transceiver unit 1502 sends second indication information to a second session management network element, where the second indication information is used to trigger the second session management network element to select, for the terminal device, a user plane network element corresponding to the address information of the first application.

Optionally, when the second indication information includes tunnel information of a second user plane network element, the transceiver unit 1502 receives path information of a second access path from the second session management network element. The second user plane network element is a user plane network element managed by the first session management network element, the path information includes tunnel information of a third user plane network element and address segment information corresponding to the second access path, and the third user plane network element is the user plane network element that is managed by the second session management network element and that corresponds to the address information of the first application.

The processing unit 1501 configures the path information for the second user plane network element.

Optionally, the transceiver unit 1502 sends, to the first network element, address segment information corresponding to the user plane network element managed by the first session management network element and application information of the first application. The first application is an application corresponding to the user plane network element managed by the first session management network element, and the application information is used by the first network element to determine the first session management network element.

In another possible design, the communication apparatus 150 may be configured to implement a function of the second SMF network element in the method embodiment shown in FIG. 6A to FIG. 6D, FIG. 8, FIG. 9A to FIG. 9C, or FIG. 11A and FIG. 11B.

The transceiver unit 1502 is configured to receive second indication information from a first SMF network element, where the second indication information is used to trigger the second session management network element to select, for a terminal device, a user plane network element corresponding to address information of a first application.

The processing unit 1501 is configured to select, from a plurality of user plane network elements managed by the second session management network element, a third user plane network element corresponding to the address information of the first application.

Optionally, the processing unit 1501 creates, based on the third user plane network element, a second access path for the terminal device to access the first application.

Optionally, when the second indication information includes tunnel information of a second user plane network element, the transceiver unit 1502 sends path information of the second access path to the first session management network element. The second user plane network element is a user plane network element managed by the first session management network element, and the path information includes tunnel information of the third user plane network element and address segment information corresponding to the second access path.

In embodiments of this application, that the processing unit 1501 is configured to receive or send the foregoing information or message via the transceiver unit 1502 may be understood as follows: After receiving a signal that carries the foregoing information or message and that is sent by the outside, the transceiver unit 1502 sends the signal obtained through or without signal processing to the processing unit 1501 for processing. Alternatively, in embodiments of this application, that the processing unit 1501 is configured to receive the foregoing information or message via the transceiver unit 1502 may be understood as follows: After receiving a signal that carries the foregoing information or message and that is sent by the outside, the transceiver unit 1502 sends the signal obtained through or without signal processing to the processing unit 1501 for processing. This is described herein once for all, and details are not described below again.

All related content of the steps in the foregoing method embodiments may be cited in function descriptions of the corresponding functional modules. Details are not described herein again.

In this embodiment, the communication apparatus 150 is presented in a form of functional modules obtained through division in an integrated manner. The "unit" or "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 150 may be in a form of the communication device 100 shown in FIG. 14.

For example, functions/implementation processes of the processing unit 1501 and the transceiver unit 1502 in FIG. 15 may be implemented by the processor 1001 in the communication device 100 shown in FIG. 14 by invoking the computer instructions stored in the memory 1003. Alternatively, a function/an implementation process of the processing unit 1501 in FIG. 15 may be implemented by the processor 1001 in the communication device 100 shown in FIG. 14 by invoking the computer instructions stored in the memory 1003, and a function/an implementation process of the transceiver unit 1502 in FIG. 15 may be implemented by using the communication interface 1004 in the communication device 100 shown in FIG. 14.

An embodiment of this application provides a computer-readable storage medium. The computer-readable storage medium stores computer instructions. When the computer instructions are executed, an action of the first network element, the first SMF network element, or the second SMF network element in the method embodiment shown in FIG. 2 to FIG. 13 is performed.

An embodiment of this application provides a computer program product including computer instructions. When the computer instructions are executed, an action of the first network element, the first SMF network element, or the second SMF network element in the method embodiment shown in FIG. 2 to FIG. 13 is performed.

An embodiment of this application provides a communication system. The communication system includes a first network element, a first SMF network element, a second SMF network element, and a terminal device, and may further include a second user plane network element. Further, an EASDF network element may be further included.

The first network element may be configured to perform the methods of the first network element in Embodiments 1, 2, and 3, the first SMF network element may be configured to perform the methods of the first SMF network element in Embodiments 1, 2, and 3, and the second SMF network element may be configured to perform the methods of the second SMF network element in Embodiments 1, 2, and 3.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An application addressing method, applied to a first network element, and comprising:
obtaining address segment information corresponding to a user plane network element managed by a first session management network element; and
when address information of a first application is in the address segment information corresponding to a user plane network element managed by the first session management network element, sending first indication information to the first session management network element, wherein the first indication information is used to trigger the first session management network element to select, for a terminal device, a user plane network element corresponding to the address information of the first application.

2. The method according to claim 1, wherein the obtaining address segment information corresponding to a user plane network element managed by a first session management network element comprises:
receiving the address segment information that corresponds to a user plane network element managed by the first session management network element and that is sent by the first session management network element.

3. The method according to claim 2, wherein the method further comprises:
receiving application information that is of the first application and that is sent by the first session management network element, wherein the first application is an application corresponding to a user plane network element managed by the first session management network element, and the application information is used by the first network element to determine the first session management network element.

4. The method according to any one of claims 1 to 3, wherein the method further comprises:
receiving a domain name resolution request from the terminal device, wherein the domain name resolution request is used to obtain the address information that is of the first application and that is requested by the terminal device; and
determining the address information of the first application based on the domain name resolution request.

5. The method according to any one of claims 1 to 4, wherein the method further comprises:
when the address information of the first application is not in the address segment information corresponding to a user plane network element managed by the first session management network element, sending the address information of the first application to the first session management network element.

6. The method according to any one of claims 1 to 5, wherein the first network element is an edge application server discovery function network element or a user plane network element.

7. An application addressing method, applied to a first session management network element, and comprising:
receiving first indication information from a first network element, wherein the first indication information is used to trigger the first session management network element to select, for a terminal device, a user plane network element corresponding to address information of the first application; and
selecting, from a plurality of user plane network elements managed by the first session management network element, a first user plane network element corresponding to the address information of the first application.

8. The method according to claim 7, wherein the method further comprises:
creating, based on the first user plane network element, a first access path for the terminal device to access the first application.

9. The method according to claim 7, wherein the method further comprises:
receiving the address information of the first application from the first network element;
determining whether the address information of the first application is in address segment information of the plurality of user plane network elements managed by the first session management network element; and
if the address information of the first application is not in the address segment information, sending second indication information to a second session management network element, wherein the second indication information is used to trigger the second session management network element to select, for the terminal device, a user plane network element corresponding to the address information of the first application.

10. The method according to claim 9, wherein the method further comprises:
when the second indication information comprises tunnel information of a second user plane network element, receiving path information of a second access path from the second session management network element, wherein the second user plane network element is a user plane network element managed by the first session management network element, the path information comprises tunnel information of a third user plane network element and address segment information corresponding to the second access path, and the third user plane network element is the user plane network element that is managed by the second session management network element and that corresponds to the address information of the first application; and
configuring the path information for the second user plane network element.

11. The method according to any one of claims 7 to 10, wherein the method further comprises:
sending, to the first network element, address segment information corresponding to a user plane network element managed by the first session management network element and application information of the first application, wherein the first application is an application corresponding to a user plane network element managed by the first session management network element, and the application information is used by the first network element to determine the first session management network element.

12. An application addressing method, applied to a second session management network element, and comprising:
receiving second indication information from a first session management network element, wherein the second indication information is used to trigger the second session management network element to select, for a terminal device, a user plane network element corresponding to address information of the first application; and
selecting, from a plurality of user plane network elements managed by the second session management network element, a third user plane network element corresponding to the address information of the first application.

13. The method according to claim 12, wherein the method further comprises:
creating, based on the third user plane network element, a second access path for the terminal device to access the first application.

14. The method according to claim 13, wherein the method further comprises:
when the second indication information comprises tunnel information of a second user plane network element, sending path information of the second access path to the first session management network element, wherein the second user plane network element is a user plane network element managed by the first session management network element, and the path information comprises tunnel information of the third user plane network element and address segment information corresponding to the second access path.

15. A communication apparatus, comprising:
a communication unit, configured to receive and send data; and
a processing unit, configured to perform the method according to any one of claims 1 to 14.

16. A communication apparatus, comprising a processor and a transceiver, wherein
the transceiver is configured to receive and send data or information; and
the processor is coupled to a memory, and is configured to invoke a program in the memory, to enable the communication apparatus to perform the method according to any one of claims 1 to 14.

17. A chip, comprising a processor, wherein the processor is coupled to a memory, and is configured to execute a computer program or instructions stored in the memory, so that the chip performs the method according to any one of claims 1 to 14.

18. A computer-readable storage medium, comprising a computer program or instructions, wherein when the computer program or the instructions are executed by a computer, the processor performs the method according to any one of claims 1 to 14.

19. A computer program product, comprising computer instructions, wherein when the computer instructions are run on a computer, the computer is enabled to perform the method according to any one of claims 1 to 14.

20. A communication system, wherein the system comprises a first network element and a first session management network element, wherein
the first network element is configured to perform the method according to any one of claims 1 to 6; and
the first session management network element is configured to perform the method according to any one of claims 7 to 11.

21. The system according to claim 20, wherein the system further comprises a second session management network element, and the second session management network element is configured to perform the method according to any one of claims 12 to 14.
